# EUROPEAN PATENT APPLICATION

(11) **EP 4 319 445 A1**
(43) Date of publication of application: **07.02.2024**
(21) Application number: 22794510.2
(22) Date of filing: 01.04.2022
(51) Int. Cl.: H04W 74/08, H04W 74/00, H04W 72/04

(54) **COMMUNICATION METHOD AND APPARATUS**

(30) Priority: 30.04.2021 CN 202110486366
(71) Applicant: Huawei Technologies Co., Ltd., Shenzhen, Guangdong 518129 (CN)
(72) Inventor: CHEN, Ying, Shenzhen, Guangdong 518129 (CN); LUO, Hejia, Shenzhen, Guangdong 518129 (CN); WANG, Jun, Shenzhen, Guangdong 518129 (CN)
(74) Representative: Gill Jennings & Every LLP
(86) International application number: PCT/CN2022/084927
(87) International publication number: WO 2022/228038

(57) **Abstract**

This application provides a communication method and apparatus, to improve an anti-interference capability between carriers, and reduce inter-carrier interference. The method includes: obtaining resource configuration information, determining a first start time location for communicating a first preamble sequence, and starting to send the first preamble sequence from the first start time location. The resource configuration information indicates a random access resource, and the resource configuration information includes information about at least two start time locations. The first start time location is one of the at least two start time locations.

## Description

This application claims priority to Chinese Patent Application No. 202110486366.4, filed with the China National Intellectual Property Administration on April 30, 2021 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Satellite communication is characterized by wide coverage, high mobility, and the like. In a random access procedure, due to the high mobility of the satellite communication, a large time offset and a large frequency offset are introduced to a preamble (preamble) sequence in a process in which a network device receives the preamble sequence from a terminal device, and consequently inter-carrier interference is introduced.

To reduce the inter-carrier interference, the terminal device may estimate, based on a geographical location and ephemeris information of the terminal device, the time offset and the frequency offset that are introduced in transmission of the preamble sequence, and perform precompensation. However, an inaccurate geographical location and inaccurate ephemeris information, a frequency offset introduced by hardware of the terminal device, and the like also introduce a frequency offset to the preamble sequence, and consequently the inter-carrier interference is increased.

### SUMMARY

Embodiments of this application provide a communication method and apparatus, to improve an anti-interference capability between carriers, and reduce inter-carrier interference.

To achieve the foregoing objectives, this application uses the following technical solutions.

According to a first aspect, a communication method is provided. The communication method includes: obtaining resource configuration information, determining a first start time location for communicating a first preamble sequence, and starting to send the first preamble sequence from the first start time location. The resource configuration information indicates a random access resource, and the resource configuration information includes information about at least two start time locations. The first start time location is one of the at least two start time locations.

Based on the communication method according to the first aspect, a terminal device obtains the resource configuration information, where the resource configuration information indicates the random access resource and includes the information about the at least two start time locations. The terminal device determines, in the at least two start time locations, the first start time location for communicating the first preamble sequence, and starts to send the first preamble sequence from the first start time location. In this way, a start time location for sending the first preamble sequence is selected, so that preamble sequences corresponding to different frequency domain resources start to be sent at different start time locations, and therefore an anti-interference capability between carriers can be improved, and inter-carrier interference can be reduced. In addition, available frequency domain resources are not reduced, so that random access conflicts can be reduced, and a success rate can be ensured.

Optionally, the random access resource may include a narrowband physical random access channel (narrowband physical random access channel, NPRACH) resource or a physical random access channel PRACH resource.

In a possible design manner, the resource configuration information may include information about at least two start subcarriers, and a first start subcarrier corresponding to the first preamble sequence is one of the at least two start subcarriers. In this way, different preamble sequences can start to be communicated from different start subcarriers.

In a possible design manner, the first start time location is determined based on the first start subcarrier corresponding to the first preamble sequence. In this way, preamble sequences corresponding to different subcarriers separately start to be communicated at different start time locations, so that inter-subcarrier interference can be reduced. In addition, the available frequency domain resources do not need to be reduced, so that the random access conflicts can be reduced, and the success rate can be ensured.

Optionally, subcarriers of the random access resource may include at least two subcarrier groups, and the first start time location may be determined based on a subcarrier group to which the first start subcarrier belongs. Each subcarrier group may include one or more subcarriers.

In a possible design manner, the first start subcarrier corresponding to the first preamble sequence is determined based on the first start time location.

In a possible design manner, the first start time location is determined based on a frequency domain location relationship between the first start subcarrier and a start subcarrier of the random access resource. In this way, preamble sequences corresponding to adjacent subcarriers separately start to be communicated at different start time locations, so that inter-subcarrier interference can be reduced. In addition, the available frequency domain resources are not reduced, so that the random access conflicts can be reduced, and the success rate can be ensured.

Optionally, the frequency domain location relationship between the first start subcarrier and the start subcarrier of the random access resource includes being spaced by an odd quantity of subcarriers, being spaced by an even quantity of subcarriers, and being spaced by zero subcarriers.

Optionally, a start subcarrier in a case of being spaced by an odd quantity of subcarriers and a start subcarrier in a case of being spaced by an even quantity of subcarriers correspond to different start time locations, and the start subcarrier in the case of being spaced by an even quantity of subcarriers and the start subcarrier of the random access resource correspond to a same start time location.

In a possible design manner, a polarization manner for communicating the first preamble sequence is determined based on the first start subcarrier.

Optionally, polarization manners may include left-hand polarization and right-hand polarization.

Optionally, if the first start subcarrier is an odd-numbered subcarrier of the random access resource, the polarization manner for communicating the first preamble sequence is a first manner. If the first start subcarrier is an even-numbered subcarrier of the random access resource, the polarization manner for communicating the first preamble sequence is a second manner.

For example, polarization manners may include left-hand polarization and right-hand polarization. The first manner may be the left-hand polarization, and the second manner may be the right-hand polarization. Alternatively, the second manner may be the left-hand polarization, and the first manner may be the right-hand polarization.

In this way, polarization manners of preamble sequences corresponding to adjacent subcarriers are different, so that interference between the adjacent subcarriers can be reduced.

In a possible design manner, a polarization manner for communicating the first preamble sequence is determined based on the frequency domain location relationship between the first start subcarrier and the start subcarrier of the random access resource.

Optionally, the start subcarrier in the case of being spaced by an odd quantity of subcarriers and the start subcarrier in the case of being spaced by an even quantity of subcarriers correspond to different polarization manners, and the start subcarrier in the case of being spaced by an even quantity of subcarriers and the start subcarrier of the random access resource correspond to a same polarization manner.

In this way, polarization manners of preamble sequences corresponding to adjacent subcarriers are different, so that interference between the adjacent subcarriers can be reduced.

In a possible design manner, a polarization manner for communicating the first preamble sequence is determined based on a first polarization manner, the resource configuration information may include information about the first polarization manner, and the first polarization manner is a polarization manner of a preamble sequence corresponding to the start subcarrier of the random access resource.

Optionally, if the frequency domain location relationship between the first start subcarrier and the start subcarrier of the random access resource is being spaced by an even quantity of subcarriers, the polarization manner for communicating the first preamble sequence is the same as the first polarization manner. If the frequency domain location relationship between the first start subcarrier and the start subcarrier of the random access resource is being spaced by an odd quantity of subcarriers, the polarization manner for communicating the first preamble sequence is different from the first polarization manner. In this way, polarization manners of preamble sequences corresponding to adjacent subcarriers are different, so that interference between the subcarriers can be reduced.

In a possible design manner, the obtaining resource configuration information may include: receiving the resource configuration information.

Optionally, the terminal device may receive the resource configuration information from a network device. For example, the resource configuration information may be received by using a system message.

In a possible design manner, the first start time location is determined based on information about a first beam. The first beam may be used to communicate the resource configuration information. In this way, for different beams, start time locations are flexibly configured, so that inter-carrier interference between beams in a cell can be reduced.

Optionally, different beams correspond to different start time locations.

Alternatively, optionally, a cell covered by the network device may include at least two beam groups, and each beam group includes one or more beams. Beams belonging to different beam groups correspond to different start time locations.

In some implementations, the first start time location is determined based on information about a first cell.

Optionally, different cells correspond to different start time locations.

Alternatively, optionally, cells covered by the network device may include at least two cell groups, and each cell group includes one or more cells. Cells belonging to different cell groups correspond to different start time locations. In this way, for different cells, start time locations are flexibly configured, so that inter-carrier interference between the cells can be reduced.

In some implementations, the communication method provided in the first aspect may further include: determining a first periodicity for communicating the first preamble sequence. In this way, preamble sequences corresponding to different start subcarriers (for example, adjacent start subcarriers) are communicated in different periodicities, so that the inter-carrier interference can be reduced.

Optionally, start time locations corresponding to at least two periodicities may be different.

In this way, different periodicities are combined with different start time locations, so that preamble sequences corresponding to different start subcarriers (where the different start subcarriers may be adjacent) can start to be communicated at different start time locations in different periodicities, and therefore the inter-carrier interference can be reduced. In addition, different start subcarriers may be adjacent to each other at frequency domain locations, and the available frequency domain resources are not reduced, so that the random access conflicts can be reduced, and the success rate can be ensured.

According to a second aspect, a communication method is provided. The communication method includes: obtaining resource configuration information, determining a first start time location for communicating a first preamble sequence, and starting to receive the first preamble sequence from the first start time location. The resource configuration information indicates a random access resource, and the resource configuration information includes information about at least two start time locations. The first start time location is one of the at least two start time locations.

In a possible design manner, the resource configuration information may include information about at least two start subcarriers, and a first start subcarrier corresponding to the first preamble sequence is one of the at least two start subcarriers.

In a possible design manner, the first start time location is determined based on the first start subcarrier corresponding to the first preamble sequence.

In a possible design manner, the first start subcarrier corresponding to the first preamble sequence is determined based on the first start time location.

In a possible design manner, the first start time location is determined based on a frequency domain location relationship between the first start subcarrier and a start subcarrier of the random access resource.

In a possible design manner, the first start time location is determined based on information about a first beam, and the first beam may be used to communicate the resource configuration information.

In a possible design manner, a polarization manner for communicating the first preamble sequence is determined based on the first start subcarrier.

In a possible design manner, a polarization manner for communicating the first preamble sequence is determined based on the frequency domain location relationship between the first start subcarrier and the start subcarrier of the random access resource.

In a possible design manner, a polarization manner for communicating the first preamble sequence is determined based on a first polarization manner, the resource configuration information may include information about the first polarization manner, and the first polarization manner is a polarization manner of a preamble sequence corresponding to the start subcarrier of the random access resource.

In a possible design manner, the communication method according to the second aspect may further include: sending the resource configuration information.

Optionally, the resource configuration information may be configured for a terminal device by using a system message. For example, the resource configuration information may be obtained by a network device and then sent to the terminal device.

In addition, for technical effects of the communication method according to the second aspect, refer to the technical effects of the communication method according to the first aspect. Details are not described herein again.

According to a third aspect, a communication apparatus is provided. The communication apparatus includes a processing module and a transceiver module.

The processing module is configured to obtain resource configuration information. The resource configuration information indicates a random access resource, and the resource configuration information includes information about at least two start time locations.

The processing module is further configured to determine a first start time location for communicating a first preamble sequence. The first start time location is one of the at least two start time locations.

The transceiver module is configured to start to send the first preamble sequence from the first start time location.

In a possible design manner, the resource configuration information may include information about at least two start subcarriers, and a first start subcarrier corresponding to the first preamble sequence is one of the at least two start subcarriers.

In a possible design manner, the first start time location is determined based on the first start subcarrier corresponding to the first preamble sequence.

In a possible design manner, the first start subcarrier corresponding to the first preamble sequence is determined based on the first start time location.

In a possible design manner, the first start time location is determined based on a frequency domain location relationship between the first start subcarrier and a start subcarrier of the random access resource.

In a possible design manner, a polarization manner for communicating the first preamble sequence is determined based on the first start subcarrier.

In a possible design manner, a polarization manner for communicating the first preamble sequence is determined based on the frequency domain location relationship between the first start subcarrier and the start subcarrier of the random access resource.

In a possible design manner, a polarization manner for communicating the first preamble sequence is determined based on a first polarization manner, the resource configuration information may include information about the first polarization manner, and the first polarization manner is a polarization manner of a preamble sequence corresponding to the start subcarrier of the random access resource.

In a possible design manner, the transceiver module is further configured to receive the resource configuration information.

In a possible design manner, the first start time location is determined based on information about a first beam. The first beam may be used to communicate the resource configuration information.

It should be noted that the transceiver module in the third aspect may include a receiving module and a sending module. The receiving module is configured to receive data and/or signaling from a network device, and the sending module is configured to send data and/or signaling to the network device. A specific implementation of the transceiver module is not specifically limited in this application.

Optionally, the communication apparatus in the third aspect may further include a storage module. The storage module stores a program or instructions. When the processing module executes the program or the instructions, the communication apparatus in the third aspect may be enabled to perform the method according to the first aspect.

It should be noted that the communication apparatus in the third aspect may be a terminal device, or may be a chip (system) or another part or component that may be disposed in the terminal device. This is not limited in this application.

In addition, for technical effects of the communication apparatus in the third aspect, refer to the technical effects of the communication method according to any possible implementation of the first aspect. Details are not described herein again.

According to a fourth aspect, a communication apparatus is provided. The communication apparatus includes a processing module and a transceiver module.

The processing module is configured to obtain resource configuration information. The resource configuration information indicates a random access resource, and the resource configuration information includes information about at least two start time locations.

The processing module is further configured to determine a first start time location for communicating a first preamble sequence. The first start time location is one of the at least two start time locations.

The transceiver module is configured to start to receive the first preamble sequence from the first start time location.

In a possible design manner, the resource configuration information may include information about at least two start subcarriers, and a first start subcarrier corresponding to the first preamble sequence is one of the at least two start subcarriers.

In a possible design manner, the first start time location is determined based on the first start subcarrier corresponding to the first preamble sequence.

In a possible design manner, the first start subcarrier corresponding to the first preamble sequence is determined based on the first start time location.

In a possible design manner, the first start time location is determined based on a frequency domain location relationship between the first start subcarrier and a start subcarrier of the random access resource.

In a possible design manner, the first start time location is determined based on information about a first beam, and the first beam may be used to communicate the resource configuration information.

In a possible design manner, a polarization manner for communicating the first preamble sequence is determined based on the first start subcarrier.

In a possible design manner, a polarization manner for communicating the first preamble sequence is determined based on the frequency domain location relationship between the first start subcarrier and the start subcarrier of the random access resource.

In a possible design manner, a polarization manner for communicating the first preamble sequence is determined based on a first polarization manner, the resource configuration information may include information about the first polarization manner, and the first polarization manner is a polarization manner of a preamble sequence corresponding to the start subcarrier of the random access resource.

In a possible design manner, the transceiver module is further configured to send the resource configuration information.

It should be noted that the transceiver module in the fourth aspect may include a receiving module and a sending module. The receiving module is configured to receive data and/or signaling from a terminal device, and the sending module is configured to send data and/or signaling to the terminal device. A specific implementation of the transceiver module is not specifically limited in this application.

Optionally, the communication apparatus in the fourth aspect may further include a storage module. The storage module stores a program or instructions. When the processing module executes the program or the instructions, the communication apparatus in the fourth aspect may be enabled to perform the method according to the second aspect.

It should be noted that the communication apparatus in the fourth aspect may be a network device, or may be a chip (system) or another part or component that may be disposed in the network device. This is not limited in this application.

In addition, for technical effects of the communication apparatus in the fourth aspect, refer to the technical effects of the communication method according to any possible implementation of the second aspect. Details are not described herein again.

According to a fifth aspect, a communication apparatus is provided. The communication apparatus includes a processor. The processor is coupled to a memory, and the memory is configured to store a computer program.

The processor is configured to execute the computer program stored in the memory, so that the communications apparatus performs the communication method according to any possible implementation of the first aspect and the second aspect.

In a possible design, the communication apparatus in the fifth aspect may further include a transceiver. The transceiver may be a transceiver circuit or an input/output port. The transceiver may be used by the communication apparatus to communicate with another device.

It should be noted that the input port may be configured to implement the receiving functions in the first aspect and the second aspect, and the output port may be configured to implement the sending functions in the first aspect and the second aspect.

In this application, the communication apparatus in the fifth aspect may be a terminal device or a network device, or a chip or a chip system disposed in the terminal device or the network device.

In addition, for technical effects of the communication apparatus in the fifth aspect, refer to the technical effects of the communication method according to any implementation of the first aspect and the second aspect. Details are not described herein again.

According to a sixth aspect, a communication system is provided. The communication system includes a terminal device and a network device.

According to a seventh aspect, a chip system is provided. The chip system includes a logic circuit and an input/output port. The logic circuit is configured to implement the processing functions in the first aspect and the second aspect, and the input/output port is configured to implement the receiving and sending functions in the first aspect and the second aspect. Specifically, the input port may be configured to implement the receiving functions in the first aspect and the second aspect, and the output port may be configured to implement the sending functions in the first aspect and the second aspect.

In a possible design, the chip system further includes a memory, and the memory is configured to store program instructions and data for implementing the functions in the first aspect and the second aspect.

The chip system may include a chip, or may include a chip and another discrete component.

According to an eighth aspect, a computer-readable storage medium is provided. The computer-readable storage medium includes a computer program or instructions. When the computer program or the instructions are run on a computer, the communication method according to any possible implementation of the first aspect and the second aspect is performed.

According to a ninth aspect, a computer program product is provided. The computer program product includes a computer program or instructions. When the computer program or the instructions are run on a computer, the communication method according to any possible implementation of the first aspect and the second aspect is performed.

### BRIEF DESCRIPTION OF DRAWINGS

FIG. 1 is a schematic diagram of an architecture of a communication system according to an embodiment of this application;
FIG. 2 is a schematic diagram of an architecture of another communication system according to an embodiment of this application;
FIG. 3 is a schematic diagram of preamble sequences according to an embodiment of this application;
FIG. 4 is a schematic diagram of preamble sequence frequency hopping according to an embodiment of this application;
FIG. 5 is a schematic diagram of a random access resource according to an embodiment of this application;
FIG. 6 is a schematic diagram of other preamble sequence frequency hopping according to an embodiment of this application;
FIG. 7 is a schematic flowchart of a communication method according to an embodiment of this application;
FIG. 8 is a schematic application diagram of a communication method according to an embodiment of this application;
FIG. 9 is a schematic application diagram of another communication method according to an embodiment of this application;
FIG. 10 is a schematic application diagram of still another communication method according to an embodiment of this application;
FIG. 11 is a schematic flowchart of another communication method according to an embodiment of this application;
FIG. 12 is a schematic diagram of a structure of a communication apparatus according to an embodiment of this application; and
FIG. 13 is a schematic diagram of a structure of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, 4th generation (4th generation, 4G) mobile communication systems such as a long term evolution (long term evolution, LTE) system, a worldwide interoperability for microwave access (worldwide interoperability for microwave access, WiMAX) communication system, 5th generation (5th generation, 5G) mobile communication systems such as a new radio (new radio, NR) system, and future communication systems such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

A network architecture and a service scenario described in embodiments of this application are intended to describe the technical solutions of embodiments of this application more clearly, and do not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

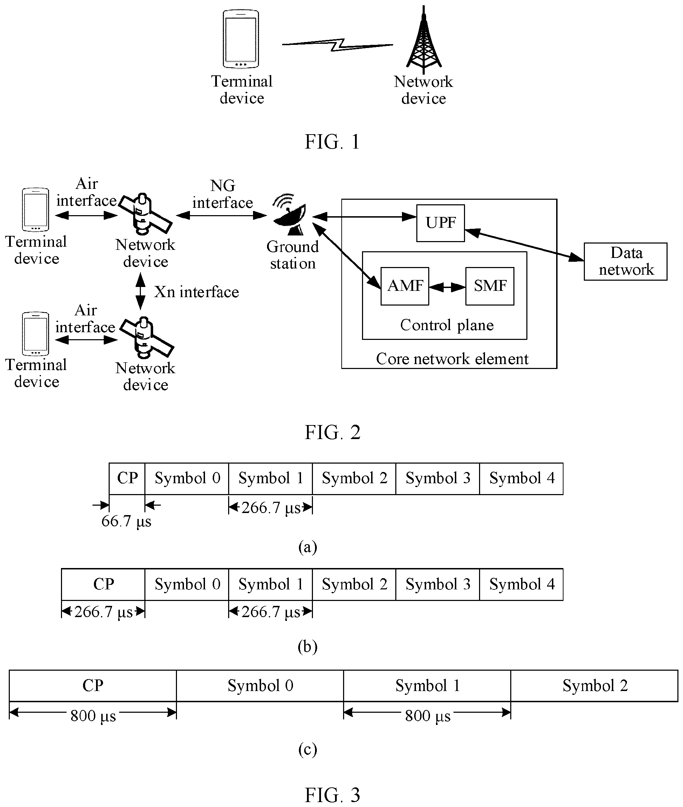

For ease of understanding embodiments of this application, a communication system shown in FIG. 1 is first used as an example to describe in detail a communication system applicable to embodiments of this application. For example, FIG. 1 is a schematic diagram of an architecture of a communication system to which a communication method according to embodiments of this application is applicable.

As shown in FIG. 1, the communication system includes a terminal device and a network device.

The terminal device is a terminal that accesses the communication system and has a wireless transceiver function, or a chip or a chip system that may be disposed in the terminal. The terminal device may also be referred to as user equipment (User Equipment, UE), a user apparatus, an access terminal, a subscriber unit, a subscriber station, a mobile station (mobile station, MS), a remote station, a remote terminal, a mobile device, a user terminal, a terminal, a terminal unit, a terminal station, a terminal apparatus, a wireless communication device, a user agent, or a user apparatus.

For example, the terminal device in embodiments of this application may be a mobile phone (mobile phone), a wireless data card, a personal digital assistant (personal digital assistant, PDA) computer, a laptop computer (laptop computer), a tablet computer (Pad), a computer with a wireless transceiver function, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a game machine, a smart television, a smart speaker, a smart refrigerator, or fitness equipment) in a smart home (smart home), a vehicle-mounted terminal, or an RSU having a terminal function. The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device (handset) with a wireless communication function, a computing device or another processing device connected to a wireless modem, a wearable device, or the like.

For another example, the terminal device in embodiments of this application may be an express delivery terminal (for example, a device that can monitor a location of a cargo vehicle, or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, the terminal device in this application may be a vehicle-mounted module, a vehicle-mounted module, a vehicle-mounted component, a vehicle-mounted chip, or a vehicle-mounted unit that is built in a vehicle as one or more components or units. The vehicle may implement the method provided in this application through the vehicle-mounted module, the vehicle-mounted module, the vehicle-mounted component, the vehicle-mounted chip, or the vehicle-mounted unit that is built in the vehicle.

The network device is a device that is located on a network side of the communication system and has a wireless transceiver function, or a chip or a chip system that can be disposed in the device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, a transmission point (transmission reception point, TRP; or transmission point, TP), or the like. The network device may alternatively be a gNB or a transmission point (TRP or TP) in a 5G system, for example, a new radio (new radio, NR) system, or one antenna panel or a group of antenna panels (including a plurality of antenna panels) of a base station in a 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

It should be noted that the communication method provided in embodiments of this application is applicable to any two nodes shown in FIG. 1. For specific implementation, refer to the following method embodiments. Details are not described herein.

It should be understood that FIG. 1 is merely a simplified schematic diagram of an example for ease of understanding. The communication system may further include another device that is not drawn in FIG. 1. FIG. 2 is a schematic diagram of an architecture of another communication system according to an embodiment of this application.

For example, with reference to FIG. 2, a network device may be carried on a satellite. When the network device is carried on the satellite, the communication system shown in FIG. 1 may have a communication architecture shown in FIG. 2. A terminal device may communicate with the network device by using a logical interface (for example, an air interface, where the air interface may be various types of air interfaces, for example, a 5G air interface). The network device is deployed on the satellite or another flight platform (for example, an aircraft such as an unmanned aerial vehicle). In addition, when the communication system includes a plurality of network devices carried on satellites, the network devices may communicate with each other by using a logical interface (for example, an Xn interface). There is a radio link between the satellites, and the radio link may be used to complete signaling exchange and data transmission between the network devices.

The satellite may include a geostationary orbit satellite, a non-geostationary orbit satellite, a low-orbit satellite, a medium-orbit satellite, a geosynchronous orbit satellite, a high-orbit satellite, or the like. This is not limited. The low-orbit satellite and the medium-orbit satellite may have their own motion tracks, and a plurality of satellites usually cooperate to provide communication for a fixed area. The high-orbit satellite is usually stationary, and one or a few high-orbit satellites provide communication for a fixed area.

In addition, in FIG. 1 and FIG. 2, the communication system may further include a ground station, a core network element, and a data network (data network, DN). The ground station may include a network device disposed on the ground, and may perform uplink and downlink data communication based on a wireless communication protocol. For example, the ground station may be configured to forward signaling (for example, non-access stratum (non-access stratum, NAS) signaling) and service data between the network device carried on the satellite and the core network element. The network device communicates with the ground station by using a logical interface (for example, an NG interface).

The core network element may be configured to send, to the data network, data that is of the terminal device and that is sent by the network device. Specifically, the core network element may be configured to implement services such as user access control, mobility management, session management, user security authentication, and charging. The core network element may include a plurality of functional units. For example, the core network element may be divided into control plane functional entities and data plane functional entities. The control plane functional entities may include an access and mobility management unit (access and mobility management function, AMF), a session management unit (session management function, SMF), and the like. The data plane functional entities may include a user plane unit (user plane function, UPF) and the like.

The access and mobility management unit is mainly responsible for services such as access authentication and mobility management of user equipment, and signaling exchange between functional network elements, for example, managing a registration status of a user, a connection status of the user, user registration and network access, tracking area update, user authentication during cell handover, and key security.

The session management unit may also be referred to as a session management function, a multicast/broadcast service management function (multicast/broadcast service management function, MB-SMF), a multicast session management network element, or the like. This is not limited. The session management network element is mainly configured to implement a user plane transmission logical channel, for example, session management functions such as establishment, release, and modification of a packet data unit (packet data unit, PDU) session.

The user plane unit may also be referred to as a PDU session anchor, a user plane function, or a multicast/broadcast user plane function (multicast/broadcast user plane function, MB-UPF). The user plane unit may be used as an anchor on the user plane transmission logical channel, and is mainly configured to complete functions such as routing and forwarding of user plane data, for example, establishing a channel (namely, the user plane transmission logical channel) with the terminal, forwarding a data packet between the terminal device and the DN on the channel, and being responsible for data packet filtering, data forwarding, rate control, charging information generation, traffic statistics collection, and the like for the terminal. A multicast/broadcast (multicast/broadcast, MB) service controller (MB service controller) has service management functions such as group management, security management, and service announcement.

It should be noted that, in addition to the foregoing units, the core network device may further include a policy control unit (policy control function, PCF), an application function unit (application function, AF), and the like. This is not limited.

The data network may be an operator network that provides a data transmission service for the terminal device, for example, an operator network that provides an IP multimedia service (IP multi-media service, IMS) for the terminal device. An application server (application server, AS) may be deployed in the DN, and the application server may provide a data transmission service for the terminal device.

In addition, a person of ordinary skill in the art may know: With evolution of the network architecture and emergence of new service scenarios, the technical solutions provided in embodiments of this application are also applicable to similar technical problems.

To make embodiments of this application clearer, the following uniformly describes some content and concepts related to embodiments of this application.

### 1. Preamble sequence

The preamble sequence may be applied to a random access procedure. For example, a terminal device sends a preamble sequence to a network device, to notify the network device that the terminal device is to send a random access request to the network device. The random access procedure may be a procedure in which the terminal device and the network device establish an initial communication connection.

For example, the preamble sequence includes a cyclic prefix (cyclic prefix, CP) and a symbol. The preamble sequence may be communicated on a narrowband physical random access channel NPRACH or a physical random access channel PRACH in a single carrier (single-tone) manner based on frequency hopping. When subcarrier spacings are different, preamble sequence formats may be different. For example, CP lengths, quantities of symbols, and/or symbol lengths may be different.

For example, with reference to (a) in FIG. 3, a preamble sequence includes one CP and five symbols. A length of the CP is 66.7 µs, a cell coverage radius of 10 km can be supported, and a length of each symbol is 266.7 µs. This may correspond to subcarriers with a spacing of 3.75 kHz.

For another example, with reference to (b) in FIG. 3, a preamble sequence includes one CP and five symbols. A length of the CP is 266.7 µs, a cell coverage radius of 40 km can be supported, and a length of each symbol is 266.7 µs. This may correspond to subcarriers with a spacing of 3.75 kHz. In other words, if a subcarrier spacing is 3.75 kHz, a length of a CP of a corresponding preamble sequence may be 66.7 µs or 266.7 µs.

For another example, with reference to (c) in FIG. 3, a preamble sequence includes one CP and three symbols. A length of the CP is 800 µs, a length of each symbol is 800 µs, and the CP occupies a length of one symbol. This may correspond to subcarriers with a spacing of 1.25 kHz.

### 2. Preamble sequence frequency hopping

To enhance coverage, a preamble sequence may be repeated, and a quantity of repetition times of the preamble sequence is configurable. For example, a set of quantities of repetition times is {1, 2, 4, 8, 16, 32, 64, 128}. The preamble sequence may be repeated in a unit of a symbol group. One preamble sequence may be formed by four symbol groups in a frequency hopping manner, each preamble sequence has a different subcarrier start location, and frequency hopping is also performed according to a specific rule. For example, for the four symbol groups, frequency hopping may be performed in a mode of "level 1: single carrier" and "level 2: six subcarriers". "Level 1: single carrier" indicates that a frequency hopping interval between two symbol groups is a single subcarrier, and "level 2: six subcarriers" indicates that a frequency hopping interval between two symbol groups is six subcarriers. The frequency hopping may be limited to a set of {12/24/36/48} consecutive subcarriers.

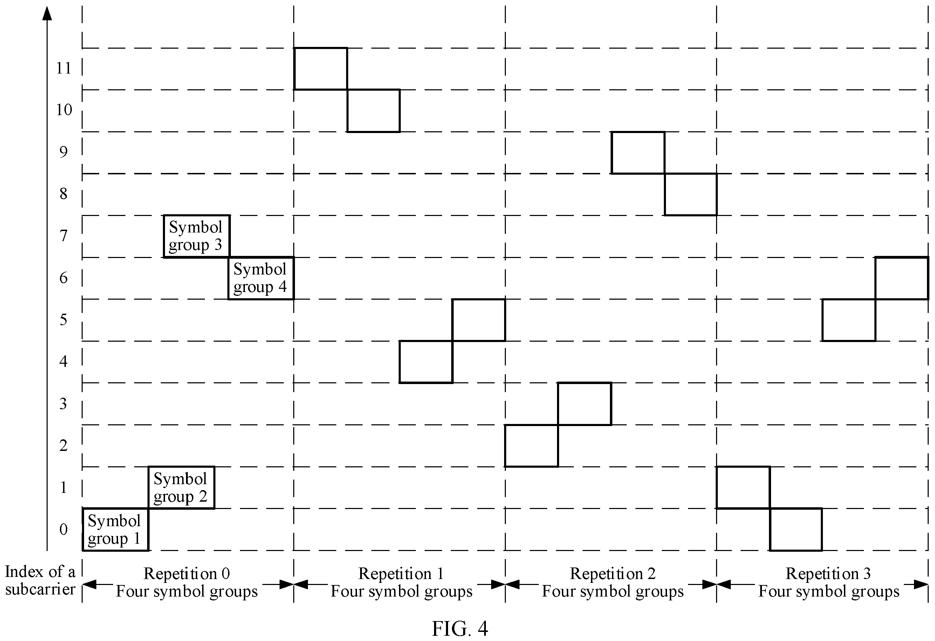

With reference to FIG. 4, a preamble sequence is repeated for four times in a unit of a symbol group, and resources of 12 subcarriers (a subcarrier 0 to a subcarrier 11) are allocated to the preamble sequence. A frequency hopping interval between a symbol group 1 and a symbol group 2 is a single subcarrier, a frequency hopping interval between the symbol group 2 and a symbol group 3 is six subcarriers, and a frequency hopping interval between the symbol group 3 and a symbol group 4 is a single subcarrier. Frequency utilization of preamble sequence frequency hopping is 100%. Allocating the resources of the 12 subcarriers to the preamble sequence can ensure that frequency hopping of 12 preamble sequences exactly fill an entire frequency domain resource.

### 3. Random access resource

Information about the random access resource includes a periodicity of the random access resource, a start time location (which may also be referred to as a time offset or a start time domain location) of each periodicity, a quantity of subcarriers, and a start frequency domain location.

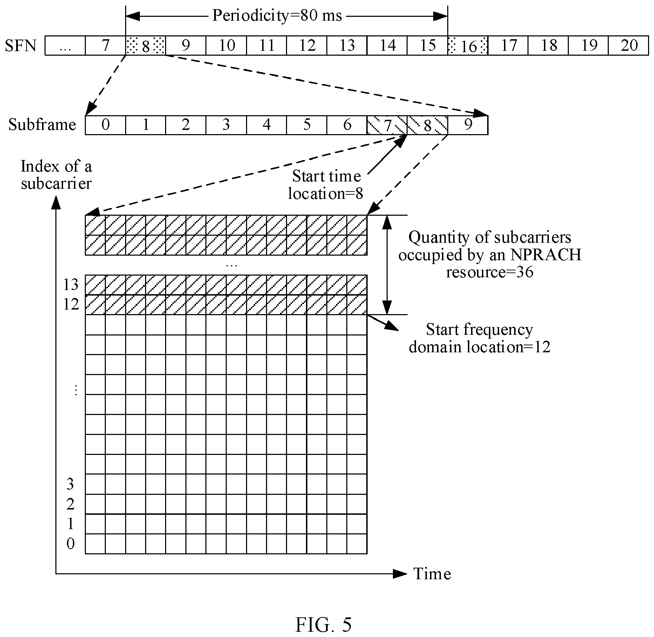

With reference to FIG. 5, an example in which the random access resource is an NPRACH resource is used. A periodicity of the NPRACH resource (nprach-Periodicity-r13) is 80 milliseconds (ms), namely, eight system frames (with a system frame number (system frame number, SFN) 8 to a system frame number 15). In other words, a start system frame number of the NPRACH resource is an integer multiple of 8. A start time location of the NPRACH resource (nprach-StartTime-r13) is 8 ms, in other words, the NPRACH resource starts from a subframe (subframe) 8. A quantity of subcarriers occupied by the NPRACH resource (nprach-NumSubcarriers-r13) is 36. A start frequency domain location of the NPRACH resource (nprach-SubcarrierOffset-r13) is a subcarrier 12.

Compared with terrestrial communication, satellite communication has unique advantages. For example, the satellite communication can provide wider coverage, and a satellite is not easily damaged by natural disasters or external forces. Therefore, communication services can be provided for some areas that cannot be covered by a terrestrial communication network, for example, an ocean and a forest, to enhance reliability of a communication system, for example, ensure that a plane, a train, and terminal devices on these vehicles can obtain communication services with better quality, provide more data transmission resources for the communication system, and improve a network rate. Therefore, a communication system that supports both the terrestrial communication and the satellite communication has advantages such as wide coverage, high reliability, multi-connection, and a high throughput.

IoT has communication features such as data burst, latency insensitive, massive connections, and wide coverage. Compared with other communication scenarios of 5G communication (for example, an enhanced mobile broadband (enhanced mobile broadband, eMBB) scenario with long communication duration, and an ultra-reliable and low-latency communication (ultra-reliable and low-latency communication, URLLC) scenario that is latency sensitive), these features of the IoT can be better supported by the satellite communication, and the satellite can provide a service for an IoT terminal device. However, compared with the terrestrial communication, if the satellite directly provides the service for the IoT terminal device, an existing IoT/NB IoT standard needs to be enhanced to some extent based on high mobility of the satellite, to meet a related communication requirement. This application can resolve a problem existing in convergence of the IoT and the satellite communication.

For example, a subcarrier spacing of a random access resource is small, and consequently inter-carrier interference is caused due to introduction of a frequency offset when a preamble sequence is communicated on adjacent frequency domain resources.

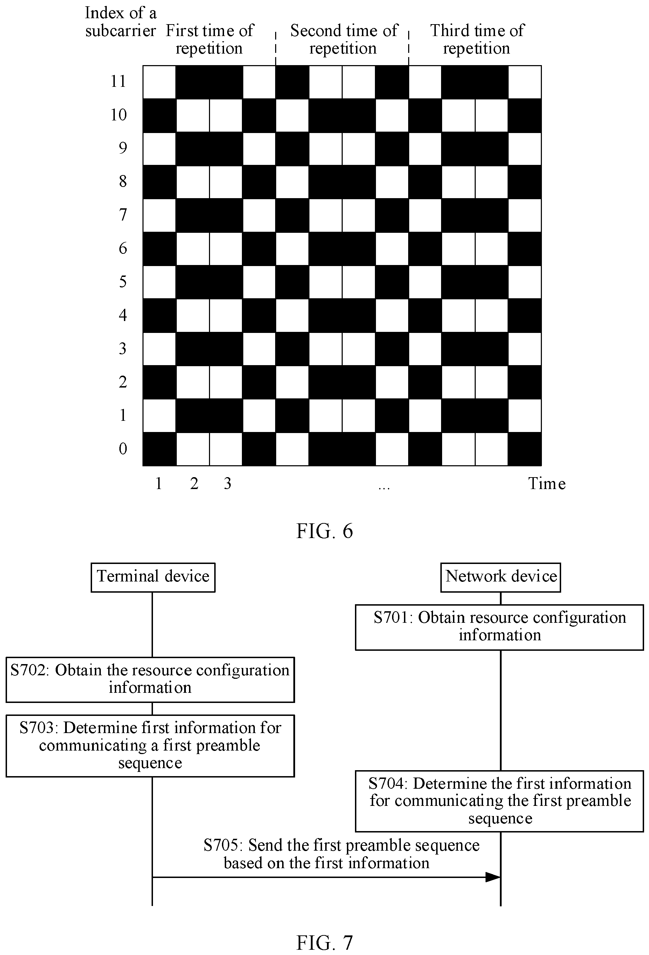

In a current technology, to reduce the inter-carrier interference, a manner of reducing available frequency hopping resources is used. As shown in FIG. 6, during frequency hopping, two adjacent preamble sequences are staggered by one subcarrier in frequency domain, to improve an anti-frequency offset capability. Although this solution resolves impact of the frequency offset, the manner of reducing the available frequency domain resources reduces a quantity of available preamble sequences, and consequently a probability of a random access conflict is increased. In a non-terrestrial (non-terrestrial, NTN) network, if a probability of a conflict is increased, a random access delay is increased, and power consumption overheads of a terminal device are increased.

Communication methods and apparatuses provided in this application can improve an anti-interference capability between carriers, and reduce inter-carrier interference. In addition, in this application, when the inter-carrier interference is reduced, frequency domain resources available to a random access sequence are not reduced, so that a random access delay is not affected, and power consumption of a terminal device can be reduced.

The following specifically describes the communication method provided in embodiments of this application with reference to FIG. 7 to FIG. 11.

For example, FIG. 7 is a schematic flowchart of a communication method according to an embodiment of this application. The communication method is applicable to communication between the network device and the terminal device shown in FIG. 1 and FIG. 2.

As shown in FIG. 7, the communication method includes the following steps.

S701: The network device obtains resource configuration information.

For example, the resource configuration information indicates a random access resource. For example, the random access resource may include an NPRACH resource or a PRACH resource.

In some embodiments, the resource configuration information may include but is not limited to one or more of the following: information about at least two start time locations, information about at least two periodicities, information about at least two start subcarriers, and information about a first polarization manner. The first polarization manner is a polarization manner of a preamble sequence corresponding to a start subcarrier of the random access resource.

In some embodiments, all start time locations in the at least two start time locations are different from each other.

In this way, different preamble sequences can start to be communicated from different start time locations.

For example, the information about the start time location may include but is not limited to one or more of the following: a time offset, a subframe index number, and an absolute start time location.

For example, as shown in FIG. 5, that the information about the start time location is the subframe index number is used as an example. The resource configuration information may include an index number of a subframe 7 in a system frame 8 and an index number of a subframe 8 in the system frame 8.

In other words, the at least two start time locations may be different subframes in a same system frame.

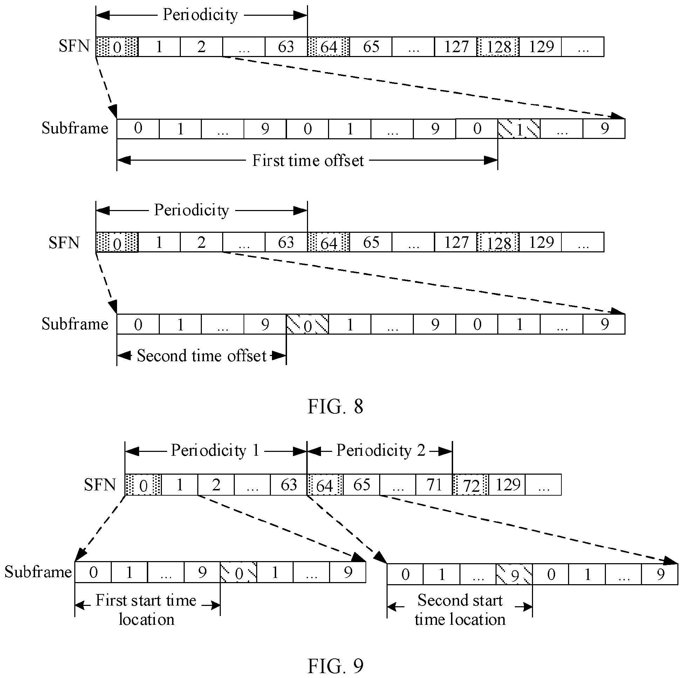

For another example, as shown in FIG. 8, that the information about the start time location is the time offset is used as an example, and a periodicity of an NPRACH resource (nprach-Periodicity-r13) is 640 ms, including 64 system frames. The resource configuration information may include a first time offset 21 ms (a subframe 1 in a system frame 2) and a second time offset 10 ms (a subframe 0 in a system frame 1).

In other words, the at least two start time locations may be different subframes in different system frames.

Similarly, the at least two start time locations may be same subframes in different system frames. For example, with reference to FIG. 8, the resource configuration information may include a first time offset 21 ms (a subframe 1 in a system frame 2) and a second time offset 11 ms (a subframe 1 in a system frame 1).

For another example, as shown in FIG. 8, that the information about the start time location is the absolute start time location is used as an example. The resource configuration information may include an absolute start time location (a subframe 1 in a system frame 2), and an absolute start time location (a subframe 0 in a system frame 1).

Alternatively, the information about the at least two start time locations may include a time offset and one or more differential time offsets. The differential time offset is an offset relative to the time offset. A new time offset can be obtained based on the time offset and the differential time offset.

For example, with reference to FIG. 8, assuming that the resource configuration information includes a first time offset 10 ms and a differential time offset 11 ms, a second time offset is a sum of the first time offset 10 ms and the differential time offset 11 ms, that is, 21 ms. It is equivalent to that the resource configuration information includes the first time offset 10 ms and the second time offset 21 ms.

It should be noted that the foregoing descriptions are provided by using an example in which the at least two start time locations include two start time locations. When there are three or more start time locations, whether all or some of the start time locations are different subframes in a same system frame, different subframes in different system frames, or same subframes in different system frames is not limited in this embodiment of this application, provided that a plurality of start time locations are different from each other. Details are not described in this embodiment of this application.

In some embodiments, all periodicities in the at least two periodicities are different from each other.

For example, as shown in FIG. 9, the resource configuration information may include a periodicity 1 (that is, 640 ms, including a system frame 0 to a system frame 63) and a periodicity 2 (that is, 80 ms, including a system frame 64 to a system frame 67 ms).

Optionally, start time locations corresponding to the periodicities may be different. The resource configuration information may include the information about the at least two start time locations and the information about the at least two periodicities.

For example, the periodicity 1 may correspond to the 1^{st} start time location 10 ms, and the periodicity 2 may correspond to the 2^{nd} start time location 9 ms.

Alternatively, optionally, start time locations corresponding to the at least two periodicities may be the same.

For example, with reference to FIG. 9, the periodicity 1 may correspond to a start time location 10 ms, and the periodicity 2 may correspond to a start time location 10 ms.

Alternatively, optionally, start time locations corresponding to some of the at least two periodicities are the same.

For example, the at least two periodicities include a periodicity 1, a periodicity 2, and a periodicity 3. The periodicity 1 may correspond to a start time location 10 ms, the periodicity 2 may correspond to a start time location 9 ms, and the periodicity 3 may correspond to a start time location 10 ms.

In some embodiments, all start subcarriers in the at least two start subcarriers are different from each other.

In this way, different preamble sequences can start to be communicated from different start subcarriers.

For example, the information about the start subcarrier may include but is not limited to one or more of the following: an offset of the start subcarrier, an index number of the start subcarrier, and an absolute location of the start subcarrier.

For example, with reference to FIG. 5, that the information about the start subcarrier is the index number or the absolute location of the start subcarrier is used as an example. The resource configuration information may include an index number of a subcarrier 12 and an index number of a subcarrier 13.

For another example, with reference to FIG. 5, that the information about the start subcarrier is the offset of the start subcarrier is used as an example. The offset of the start subcarrier may be an offset of the start subcarrier for communicating a preamble sequence relative to the start subcarrier of the random access resource. It is assumed that the resource configuration information may include an offset 0 of a start subcarrier and an offset 1 of a start subcarrier, and the start subcarrier of the random access resource is a subcarrier 12. In this case, one start subcarrier is the subcarrier 12, and the other start subcarrier is a subcarrier 13.

Alternatively, the information about the at least two start subcarriers may include a start subcarrier and one or more frequency offsets. The frequency offset is an offset relative to the start subcarrier, and a new start subcarrier can be obtained based on the start subcarrier and the frequency offset.

For example, with reference to FIG. 5, assuming that the resource configuration information includes a start subcarrier 1 (a subcarrier 12) and a frequency offset 1, a start subcarrier 2 is a sum of the subcarrier 12 and the frequency offset 1, that is, a subcarrier 13. It is equivalent to that the resource configuration information includes the start subcarrier 1 (namely, the subcarrier 12) and the start subcarrier 2 (namely, the subcarrier 13).

Optionally, preamble sequences corresponding to different terminal devices can start to be communicated from different start subcarriers. A preamble sequence corresponding to a terminal device 1 is communicated from the start subcarrier 1, and a preamble sequence corresponding to a terminal device 2 is communicated from the start subcarrier 2.

It should be noted that different start subcarriers may be combined with different start time locations and/or different periodicities. The resource configuration information includes the information about the at least two start time locations and the information about the at least two start subcarriers, or the resource configuration information includes the information about the at least two start subcarriers and the information about the at least two periodicities, or the resource configuration information includes the information about the at least two start time locations, the information about the at least two start subcarriers, and the information about the at least two periodicities. For a specific example, refer to a combination of the foregoing examples corresponding to the information about the at least two start time locations, the information about the at least two start subcarriers, and the information about the at least two periodicities. Details are not described in this embodiment of this application.

In some embodiments, the first polarization manner is the polarization manner of the preamble sequence corresponding to the start subcarrier of the random access resource.

With reference to FIG. 5, the start subcarrier of the random access resource is the subcarrier 12, and the resource configuration information may include a polarization manner of the subcarrier 12.

Optionally, polarization manners may include left-hand polarization and right-hand polarization.

For example, the polarization manner of the preamble sequence corresponding to the start subcarrier of the random access resource may be flexibly configured based on an adjacent cell or beam.

It should be noted that the resource configuration information may include the information about the at least two start time locations, the information about the at least two start subcarriers, the information about the at least two periodicities, and/or the information about the first polarization manner. For a specific example, refer to a combination of the foregoing examples corresponding to the information about the at least two start time locations, the information about the at least two start subcarriers, the information about the at least two periodicities, and the information about the first polarization manner. Details are not described in this embodiment of this application.

In some embodiments, the resource configuration information may further include a quantity of subcarriers occupied by the random access resource.

With reference to FIG. 5, the quantity of subcarriers occupied by the random access resource is 36.

In a possible design manner, the resource configuration information may be determined by the network device.

In another possible design manner, the resource configuration information may be preconfigured for the network device.

S702: The terminal device obtains the resource configuration information.

For a specific implementation of the resource configuration information, refer to S701. Details are not described herein again.

Optionally, S702 may include: The terminal device receives the resource configuration information.

For example, the terminal device may receive the resource configuration information from the network device. The resource configuration information may be received by using a system message.

In a possible design manner, the communication method provided in this embodiment of this application may further include: The network device sends the resource configuration information.

For example, the network device may configure the resource configuration information for the terminal device by using the system message. In other words, the resource configuration information may be obtained by the network device and then sent to the terminal device.

Alternatively, optionally, S702 may include: The terminal device determines the resource configuration information. In other words, the resource configuration information may be determined by the terminal device.

Alternatively, optionally, the resource configuration information may be preconfigured for the terminal device.

S703: The terminal device determines first information for communicating a first preamble sequence.

In some embodiments, the first information may include but is not limited to one or more of the following: a first start time location, a first start subcarrier, and a first periodicity.

In a possible design manner, S703 may include: The terminal device determines the first start time location for communicating the first preamble sequence.

For example, the first start time location is one of the at least two start time locations.

With reference to FIG. 5, the first start time location may be one of the subframe 7 or the subframe 8.

For another example, with reference to FIG. 8, the first start time location may be one of 10 ms or 21 ms.

In some embodiments, the first start time location is determined by the terminal device based on the first start subcarrier corresponding to the first preamble sequence.

Optionally, subcarriers of the random access resource include at least two subcarrier groups, and the first start time location may be determined based on a subcarrier group corresponding to the first start subcarrier. Each subcarrier group includes one or more subcarriers.

For example, start subcarriers belonging to different subcarrier groups correspond to different start time locations.

Optionally, the at least two subcarrier groups include a first subcarrier group and a second subcarrier group. The at least two start time locations include the 1^{st} start time location and the 2^{nd} start time location. The first subcarrier group corresponds to the 1^{st} start time location, and the second subcarrier group corresponds to the 2^{nd} start time location.

For example, if the first start subcarrier belongs to the first subcarrier group, the first start time location is the 1^{st} start time location in the at least two start time locations; if the first start subcarrier belongs to the second subcarrier group, the first start time location is the 2^{nd} start time location in the at least two start time locations.

Therefore, the first preamble sequence and a second preamble sequence may start to be separately sent from different start time locations, and the second preamble sequence and the first preamble sequence are preamble sequences corresponding to start subcarriers in different subcarrier groups. For example, the first start subcarrier corresponding to the first preamble sequence belongs to the first subcarrier group, and a second start subcarrier corresponding to the second preamble sequence belongs to the second subcarrier group. In this way, inter-carrier interference can be reduced, and interference between preamble sequences corresponding to a same frequency domain resource can be reduced.

Optionally, frequency hopping manners of the second preamble sequence and the first preamble sequence may be the same. The second preamble sequence and the first preamble sequence are communicated according to a same frequency hopping rule. For example, if a start subcarrier for communicating the second preamble sequence is adjacent to a start subcarrier for communicating the first preamble sequence, a subcarrier for communicating the second preamble sequence is adjacent to a subcarrier for communicating the first preamble sequence during a coexistence period. If sending of the second preamble sequence is stopped, sending of the first preamble sequence may continue; if sending of the first preamble sequence is stopped, sending of the second preamble sequence may continue.

The following describes a manner of grouping the subcarriers of the random access resource with reference to a manner 1 to a manner 3. For example, the subcarriers of the random access resource are classified into two groups.

Optionally, the manner of grouping the subcarriers of the random access resource may be pre-agreed on by the terminal device and the network device, or may be preconfigured.

Manner 1: The first subcarrier group includes an odd-numbered subcarrier of the random access resource, and the second subcarrier group includes an even-numbered subcarrier of the random access resource.

In other words, the subcarriers of the random access resource may be classified into two groups, one group is odd-numbered subcarriers, and the other group is even-numbered subcarriers.

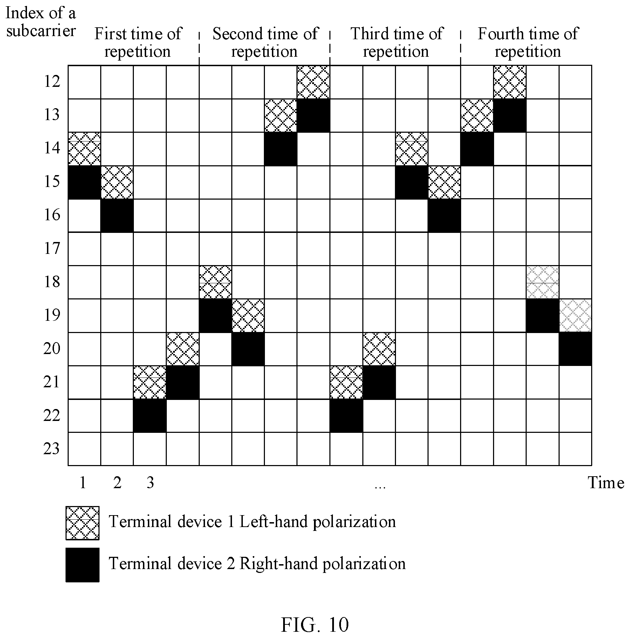

For example, with reference to FIG. 10, a subcarrier 12 is the 1^{st} subcarrier, a subcarrier 13 is the 2^{nd} subcarrier, and by analogy, a subcarrier 23 is the 12^{th} subcarrier. In this case, the first subcarrier group includes the subcarrier 12, a subcarrier 14, a subcarrier 16, a subcarrier 18, a subcarrier 20, and a subcarrier 22. The second subcarrier group includes the subcarrier 13, a subcarrier 15, a subcarrier 17, a subcarrier 19, a subcarrier 21, and the subcarrier 23. In this way, subcarriers at adjacent frequency domain locations may be classified into different subcarrier groups.

Manner 2: The first subcarrier group includes an even-numbered subcarrier of the random access resource, and the second subcarrier group includes an odd-numbered subcarrier of the random access resource. The first subcarrier group may further include the start subcarrier of the random access resource.

For example, the odd-numbered subcarrier is a subcarrier whose index number is an odd number, and the even-numbered subcarrier is a subcarrier whose index number is an even number. When an index number of the start subcarrier of the random access resource is 0, the first subcarrier group may further include a subcarrier 0.

For example, with reference to FIG. 10, the first subcarrier group includes a subcarrier 12, a subcarrier 14, a subcarrier 16, a subcarrier 18, a subcarrier 20, and a subcarrier 22. The second subcarrier group includes a subcarrier 13, a subcarrier 15, a subcarrier 17, a subcarrier 19, a subcarrier 21, and a subcarrier 23. In this way, subcarriers at adjacent frequency domain locations may be classified into different subcarrier groups.

Manner 3: The first subcarrier group includes an even-spaced subcarrier and the start subcarrier of the random access resource, and the second subcarrier group includes an odd-spaced subcarrier.

Optionally, a quantity of subcarriers between the even-spaced subcarrier and the start subcarrier of the random access resource is an even number, and a quantity of subcarriers between the odd-spaced subcarrier and the start subcarrier of the random access resource is an odd number.

For example, with reference to FIG. 10, the start subcarrier of the random access resource is a subcarrier 12. A subcarrier 13 and the subcarrier 12 are spaced by one subcarrier, in other words, are spaced by an odd quantity of subcarriers. A subcarrier 14 and the subcarrier 12 are spaced by two subcarriers, in other words, are spaced by an even quantity of subcarriers. A subcarrier 15 and the subcarrier 12 are spaced by three subcarriers, in other words, are spaced by an odd quantity of subcarriers. In this case, the first subcarrier group includes the subcarrier 12, the subcarrier 14, a subcarrier 16, a subcarrier 18, a subcarrier 20, and a subcarrier 22. The second subcarrier group includes the subcarrier 13, the subcarrier 15, a subcarrier 17, a subcarrier 19, a subcarrier 21, and a subcarrier 23.

It should be noted that the manner of grouping the subcarriers of the random access resource includes but is not limited to the manner 1 to the manner 3. This is not limited in this application.

With reference to FIG. 5, FIG. 10, and the manner 1, it is assumed that the first start subcarrier corresponding to the first preamble sequence is the subcarrier 14, the subcarrier 14 belongs to the first subcarrier group, and the first subcarrier group corresponds to the 1^{st} start time location. It is assumed that the 1^{st} start time location is the subframe 7, and the 2^{nd} start time location is the subframe 8. In this case, the first start time location is the subframe 7 in the system frame 8. Therefore, the first preamble sequence of the terminal device 1 may start to be communicated from the subframe 7 and the subcarrier 14 in the system frame 8.

Similarly, it is assumed that the second start subcarrier corresponding to the second preamble sequence is the subcarrier 15, and the subcarrier 15 belongs to the second subcarrier group. In this case, a second start time location for communicating the second preamble sequence is the subframe 8 in the system frame 8. Therefore, the second preamble sequence of the terminal device 2 may start to be communicated from the subframe 8 and the subcarrier 15 in the system frame 8. In this way, preamble sequences corresponding to adjacent subcarriers separately start to be communicated at different start time locations, so that inter-subcarrier interference can be reduced. In addition, available frequency domain resources are not reduced, so that random access conflicts can be reduced, and a success rate can be ensured. It should be noted that a combination of FIG. 5, FIG. 10, and the manner 2 has a similar effect, a combination of FIG. 5, FIG. 10, and the manner 3 has a similar effect, and a combination of FIG. 8, FIG. 10, and the manner 1 (or the manner 2 or the manner 3) has a similar effect. Details are not described herein again.

In some embodiments, the first start time location is determined by the terminal device based on a frequency domain location relationship between the first start subcarrier and the start subcarrier of the random access resource.

Optionally, the frequency domain location relationship between the first start subcarrier and the start subcarrier of the random access resource includes being spaced by an odd quantity of subcarriers, being spaced by an even quantity of subcarriers, and being spaced by zero subcarriers, or may be being spaced by subcarriers with a quantity determined according to a preset rule. "Being spaced by zero subcarriers" indicates that the first start subcarrier is the start subcarrier of the random access resource. It should be noted that in this application, a quantity of subcarriers between two subcarriers is a difference between sequence numbers of the two subcarriers.

It should be noted that an implementation of the frequency domain location relationship is not limited in this embodiment of this application, provided that the frequency domain location relationship between the first start subcarrier and the start subcarrier of the random access resource can be represented.

In some embodiments, a start subcarrier in a case of being spaced by an odd quantity of subcarriers and a start subcarrier in a case of being spaced by an even quantity of subcarriers correspond to different start time locations, and the start subcarrier in the case of being spaced by an even quantity of subcarriers and the start subcarrier of the random access resource correspond to a same start time location.

Optionally, a start subcarrier in a case of being spaced by an even quantity of subcarriers or zero subcarriers corresponds to the 1^{st} start time location, and the start subcarrier in the case of being spaced by an odd quantity of subcarriers corresponds to the 2^{nd} start time location.

If the frequency domain location relationship between the first start subcarrier and the start subcarrier of the random access resource is being spaced by an even quantity of subcarriers or zero subcarriers, the first start time location is the 1^{st} start time location. If the frequency domain location relationship between the first start subcarrier and the start subcarrier of the random access resource is being spaced by an odd quantity of subcarriers, the first start time location is the 2^{nd} start time location.

For example, with reference to FIG. 10, the start subcarrier of the random access resource is a subcarrier 12. A subcarrier 13 and the subcarrier 12 are spaced by one subcarrier, in other words, are spaced by an odd quantity of subcarriers. A subcarrier 14 and the subcarrier 12 are spaced by two subcarriers, in other words, are spaced by an even quantity of subcarriers. A subcarrier 15 and the subcarrier 12 are spaced by three subcarriers, in other words, are spaced by an odd quantity of subcarriers. With reference to FIG. 5, it is assumed that the 1^{st} start time location is the subframe 7, and the 2^{nd} start time location is the subframe 8.

It is assumed that the first start subcarrier corresponding to the first preamble sequence is the subcarrier 14 that is spaced from the subcarrier 12 by an even quantity of subcarriers, and the first start time location is the 1^{st} start time location. In this case, the first start time location is the subframe 7 in the system frame 8. Therefore, the first preamble sequence of the terminal device 1 may start to be communicated from the subframe 7 and the subcarrier 14 in the system frame 8.

Similarly, it is assumed that a second start subcarrier corresponding to a second preamble sequence is the subcarrier 15 that is spaced from the subcarrier 12 by an odd quantity of subcarriers. In this case, a second start time location for communicating the second preamble sequence is the 2^{nd} start time location, in other words, the second start time location is the subframe 8 in the system frame 8. Therefore, the second preamble sequence of the terminal device 2 may start to be communicated from the subframe 8 and the subcarrier 15 in the system frame 8. In this way, preamble sequences corresponding to adjacent subcarriers separately start to be communicated at different start time locations, so that inter-subcarrier interference can be reduced. In addition, available frequency domain resources are not reduced, so that random access conflicts can be reduced, and a success rate can be ensured.

In some embodiments, the first start time location is determined by the terminal device based on information about a first beam.

Optionally, the first beam may be used to communicate the resource configuration information. The first beam may be used for communication between the network device and the terminal device.

For example, the information about the first beam may include an identifier of the beam, or an index of a synchronization signal and physical broadcast channel block (synchronization signal and physical broadcast channel block, SSB).

Optionally, a cell covered by the network device may include one or more beams.

In some embodiments, information about a beam may correspond to information about a start time location.

Optionally, different beams correspond to different start time locations. Optionally, a correspondence between a beam and a start time location may be preconfigured.

For example, a plurality of beams include a beam 1 and a beam 2, the at least two start time locations include the 1^{st} start time location and the 2^{nd} start time location, the beam 1 corresponds to the 1^{st} start time location, and the beam 2 corresponds to the 2^{nd} start time location.

With reference to FIG. 5, it is assumed that the 1^{st} start time location is the subframe 7 in the system frame 8, the 2^{nd} start time location is the subframe 8 in the system frame 8, and the first beam is the beam 1. In this case, the first start time location is the 1^{st} start time location, namely, the subframe 7 in the system frame 8.

Alternatively, optionally, a cell covered by the network device may include at least two beam groups. In other words, beams are grouped. A first beam group corresponds to the 1^{st} start time location, and a second beam group corresponds to the 1^{st} start time location.

Optionally, each beam group includes one or more beams.

If the first beam belongs to the first beam group, the first start time location is the 1^{st} start time location. If the first beam belongs to the second beam group, the first start time location is the 2^{nd} start time location.

In this way, for different beams, start time locations are flexibly configured, so that inter-carrier interference between beams in a cell can be reduced, and an anti-interference capability of preamble sequences corresponding to a same frequency domain resource between beams can be improved.

In some other embodiments, the terminal device may randomly select one start time location from the at least two start time locations as the first start time location. In this way, inter-beam interference in a cell can be reduced.

In some embodiments, the first start time location is determined by the terminal device based on information about a first cell.

Optionally, the first cell may be a cell serving the terminal device.

In some embodiments, information about a cell may correspond to information about a start time location.

Optionally, different cells correspond to different start time locations. Optionally, a correspondence between a cell and a start time location may be preconfigured.

For example, cells covered by the network device include a cell 1 and a cell 2, the at least two start time locations include the 1^{st} start time location and the 2^{nd} start time location, the cell 1 corresponds to the 1^{st} start time location, and the cell 2 corresponds to the 2^{nd} start time location.

With reference to FIG. 5, it is assumed that the 1^{st} start time location is the subframe 7 in the system frame 8, the 2^{nd} start time location is the subframe 8 in the system frame 8, and the first cell is the cell 1. In this case, the first start time location is the 1^{st} start time location, namely, the subframe 7 in the system frame 8.

Alternatively, optionally, cells covered by the network device may include at least two cell groups. In other words, the cells are grouped. A first cell group corresponds to the 1^{st} start time location, and a second cell group corresponds to the 1^{st} start time location.

Optionally, each cell group includes one or more cells.

If the first cell belongs to the first cell group, the first start time location is the 1^{st} start time location. If the first cell belongs to the second cell group, the first start time location is the 2^{nd} start time location.

In this way, for different cells, start time locations are flexibly configured, so that inter-cell interference can be reduced.

In some other embodiments, the terminal device may randomly select one start time location from the at least two start time locations as the first start time location. In this way, inter-cell interference can be reduced.

In a possible design manner, S703 may include: The terminal device determines the first periodicity for communicating the first preamble sequence.

Optionally, different periodicities correspond to different start subcarriers for communicating the first preamble sequence.

In this way, preamble sequences corresponding to different start subcarriers (for example, adjacent start subcarriers) are communicated in different periodicities, so that inter-carrier interference can be reduced.

Optionally, subcarriers of the random access resource may be grouped in the foregoing manner 1 to manner 3. The manner 1 is used as an example. A first subcarrier group includes an odd-numbered subcarrier of the random access resource, and a second subcarrier group includes an even-numbered subcarrier of the random access resource.

For example, with reference to FIG. 9, if the first start subcarrier is an odd-numbered subcarrier of the random access resource, the first periodicity for communicating the first preamble sequence is the periodicity 1. If the first start subcarrier is an even-numbered subcarrier of the random access resource, the first periodicity for communicating the first preamble sequence is the periodicity 2.

In this way, preamble sequences corresponding to adjacent start subcarriers are communicated in different periodicities, so that inter-carrier interference can be reduced.

It should be noted that determining the first periodicity for communicating the first preamble sequence may be combined with determining the first start time location, and start time locations corresponding to the at least two periodicities may be different.

For example, the first preamble sequence may be communicated at a start time location 10 ms of the periodicity 1, and a second preamble sequence may be communicated at a start time location 9 ms of the periodicity 2.

In this way, different periodicities are combined with different start time locations, so that preamble sequences corresponding to different start subcarriers (where the different start subcarriers may be adjacent) can start to be communicated at different start time locations in different periodicities, and therefore the inter-carrier interference can be reduced. In addition, different start subcarriers may be adjacent to each other at frequency domain locations, and available frequency domain resources are not reduced, so that random access conflicts can be reduced, and a success rate can be ensured.

In a possible design manner, S703 may include: The terminal device determines the first start subcarrier for communicating the first preamble sequence.

For example, the first start subcarrier is one of the at least two start subcarriers.

With reference to FIG. 5, it is assumed that the at least two start subcarriers include the subcarrier 12 and the subcarrier 13, and the first start subcarrier may be one of the subcarrier 12 or the subcarrier 13.

With reference to FIG. 10, it is assumed that the at least two start subcarriers include a subcarrier 14 and a subcarrier 15, and the first start subcarrier may be one of the subcarrier 14 or the subcarrier 15.

In some embodiments, the first start subcarrier corresponding to the first preamble sequence is determined by the terminal device based on the first start time location.

Optionally, start time locations of the random access resource may include at least two start time groups, and the first start subcarrier may be determined based on a start time group corresponding to the first start time location. Each start time group includes one or more start time locations.

For example, start time locations belonging to different start time groups correspond to different start subcarriers.

Optionally, the at least two start time groups include a first start time group and a second start time group. Each start time group includes one or more pieces of start time.

In some embodiments, the at least two start subcarriers include the 1^{st} start subcarrier and the 2^{nd} start subcarrier. Optionally, the first start time group corresponds to the 1^{st} start subcarrier, and the second start time group corresponds to the 2^{nd} start subcarrier.

For example, if the first start time location belongs to the first start time group, the first start subcarrier is the 1^{st} start subcarrier in the at least two start subcarriers. If the first start time location belongs to the second start time group, the first start subcarrier is the 2^{nd} start subcarrier in the at least two start subcarriers.

With reference to FIG. 5, time domain resources of the random access resource may be classified into two groups, where one group is a subframe 0 to a subframe 3, and the other group is a subframe 4 to a subframe 9. For example, the first start time group includes the subframe 0 to the subframe 3, and the second start time group includes the subframe 4 to the subframe 9. With reference to FIG. 10, the 1^{st} start subcarrier is the subcarrier 14, and the 2^{nd} start subcarrier is the subcarrier 15.

It is assumed that the first start time location corresponding to the first preamble sequence is a subframe 2 and belongs to the first start time group. In this case, the first start subcarrier is the 1^{st} start subcarrier, in other words, the first start subcarrier is the subcarrier 14. Therefore, the first preamble sequence of the terminal device 1 may start to be communicated from the subframe 2 and the subcarrier 14 in the system frame 8.

Similarly, it is assumed that a second start time location corresponding to a second preamble sequence is a subframe 6 and belongs to the second start time group. In this case, the second start subcarrier is the 2^{nd} start subcarrier, in other words, the second start subcarrier is the subcarrier 15. Therefore, the second preamble sequence of the terminal device 2 may start to be communicated from the subframe 6 and the subcarrier 15 in the system frame 8.

In this way, a frequency domain staggering manner is used for a same start time group, to reduce inter-carrier interference in the same start time group. In addition, available frequency domain resources are not reduced, so that random access conflicts can be reduced, and a success rate can be ensured.

In some other embodiments, subcarriers of the random access resource may be grouped in the foregoing manner 1 to manner 3. The 1^{st} start subcarrier belongs to a first subcarrier group, and the 2^{nd} start subcarrier belongs to a second subcarrier group.

Optionally, the first start time group corresponds to the first subcarrier group, and the second start time group corresponds to the first subcarrier group.

The manner 1 is used as an example. The first subcarrier group includes an odd-numbered subcarrier of the random access resource, and the second subcarrier group includes an even-numbered subcarrier of the random access resource.

For example, if the first start time location belongs to the first start time group, the first start subcarrier is an odd-numbered subcarrier of the random access resource. If the first start time location belongs to the second start time group, the first start subcarrier is an even-numbered subcarrier of the random access resource.

For example, with reference to FIG. 5, it is assumed that the first start time group includes a subframe 0 to a subframe 3, and the second start time group includes a subframe 4 to a subframe 9. It is assumed that the first start time location corresponding to the first preamble sequence is a subframe 2, a second start time location corresponding to a second preamble sequence is a subframe 6 and belongs to the second start time group. In this case, the first start subcarrier is an odd-numbered subcarrier of the random access resource, for example, the subcarrier 14 (with reference to FIG. 10), and a second start subcarrier is an even-numbered subcarrier of the random access resource, for example, the subcarrier 15 (with reference to FIG. 10).

For another example, with reference to FIG. 5, it is assumed that the first start time group includes a subframe 0 to a subframe 3, and the second start time group includes a subframe 4 to a subframe 9. It is assumed that the first start time location corresponding to the first preamble sequence is a subframe 2, a second start time location corresponding to a third preamble sequence is the subframe 3 and belongs to the first start time group. In this case, the first start subcarrier is an odd-numbered subcarrier of the random access resource, for example, the subcarrier 14 (with reference to FIG. 10), and a third start subcarrier for communicating the third preamble sequence is an odd-numbered subcarrier of the random access resource, for example, a subcarrier 16 (with reference to FIG. 10).

In this way, start subcarriers corresponding to preamble sequences belonging to a same start time group are not adjacent at frequency domain locations, and are spaced by two subcarriers at the frequency domain locations. Start subcarriers corresponding to preamble sequences belonging to different start time groups may be adjacent at frequency domain locations. For example, preamble sequences corresponding to subcarriers at adj acent frequency domain locations may start to be communicated in different start time groups. In this way, a time staggering manner is used to reduce inter-carrier interference. A frequency domain staggering manner is used for a same start time group, to reduce inter-carrier interference in the same start time group. In addition, available frequency domain resources are not reduced, so that random access conflicts can be reduced, and a success rate can be ensured.

In some embodiments, the first start subcarrier corresponding to the first preamble sequence is determined by the terminal device based on first grouping information.

Optionally, the first grouping information includes information about at least two cell groups and/or information about at least two beam groups. Each cell group includes one or more cells, and each beam group includes one or more beams.

Optionally, the first start subcarrier corresponding to the first preamble sequence is determined based on information about a first cell.

Alternatively, optionally, the first start subcarrier corresponding to the first preamble sequence is determined based on information about a first beam.

In other words, a cell group or a beam group in which the terminal device is located may be determined based on a location of the terminal device.

For example, the terminal device may determine, based on a location of the terminal device relative to a satellite, the cell group or the beam group in which the terminal device is located. Alternatively, the terminal device may determine, based on the location of the terminal device, the cell group or the beam group in which the terminal device is located.

Optionally, the terminal device may have a global navigation satellite system (global navigation satellite system, GNSS) capability.

Optionally, the first grouping information may be preconfigured, or the first grouping information may be configured by the network device for the terminal device.

For example, the at least two cell groups include a first cell group and a second cell group, and the at least two beam groups include a first beam group and a second beam group.

In some embodiments, the at least two start subcarriers include the 1^{st} start subcarrier and the 2^{nd} start subcarrier.

Optionally, subcarriers of the random access resource may be grouped in the foregoing manner 1 to manner 3. The 1^{st} start subcarrier belongs to a first subcarrier group, and the 2^{nd} start subcarrier belongs to a second subcarrier group.

Optionally, the first cell group corresponds to the first subcarrier group, and the second cell group corresponds to the first subcarrier group. The first beam group corresponds to the first subcarrier group, and the second beam group corresponds to the first subcarrier group.

The manner 1 is used as an example. The first subcarrier group includes an odd-numbered subcarrier of the random access resource, and the second subcarrier group includes an even-numbered subcarrier of the random access resource.

For example, if the first cell belongs to the first cell group, the first start subcarrier is an odd-numbered subcarrier of the random access resource. If the first cell belongs to the second cell group, the first start subcarrier is an even-numbered subcarrier of the random access resource.

For example, if the first beam belongs to the first beam group, the first start subcarrier is an odd-numbered subcarrier of the random access resource. If the first beam belongs to the second beam group, the first start subcarrier is an even-numbered subcarrier of the random access resource.

In this way, start subcarriers corresponding to preamble sequences of terminal devices belonging to a same cell group or beam group are not adjacent at frequency domain locations, and are spaced by two subcarriers at the frequency domain locations, so that interference can be reduced. Start subcarriers corresponding to preamble sequences of terminal devices belonging to different cell groups or beam groups may be adjacent at frequency domain locations. In other words, terminal devices of preamble sequences corresponding to subcarriers at adjacent frequency domain locations are located in different areas, so that inter-carrier interference in a cell group or a beam group can be reduced.

It should be noted that terminal devices are grouped based on locations of the terminal devices, or the terminal devices may be grouped in another manner, for example, based on capabilities of the terminal devices. The first grouping information may include other grouping information. Details are not described herein.

In some embodiments, the first information may include a polarization manner for communicating the first preamble sequence.

In a possible design manner, S703 may include: The terminal device determines the polarization manner for communicating the first preamble sequence.

In a possible design manner, the polarization manner for communicating the first preamble sequence is determined by the terminal device based on the first start subcarrier.

For example, the polarization manner for communicating the first preamble sequence is determined based on an offset, an index number, and a frequency domain location of the first start subcarrier.

Optionally, subcarriers of the random access resource may be grouped in the foregoing manner 1 to manner 3. The manner 1 is used as an example. A first subcarrier group includes an odd-numbered subcarrier of the random access resource, and a second subcarrier group includes an even-numbered subcarrier of the random access resource.

Optionally, if the first start subcarrier is an odd-numbered subcarrier of the random access resource, the polarization manner for communicating the first preamble sequence is a first manner. If the first start subcarrier is an even-numbered subcarrier of the random access resource, the polarization manner for communicating the first preamble sequence is a second manner.

For example, polarization manners may include left-hand polarization and right-hand polarization. The first manner may be the left-hand polarization, and the second manner may be the right-hand polarization. Alternatively, the second manner may be the left-hand polarization, and the first manner may be the right-hand polarization.

For example, the first manner is the left-hand polarization, and the second manner is the right-hand polarization. With reference to FIG. 10, the first start subcarrier for communicating the first preamble sequence is a subcarrier 14, so that all polarization manners for communicating the first preamble sequence are the left-hand polarization. A second start subcarrier for communicating a second preamble sequence is a subcarrier 15, so that all polarization manners for communicating the second preamble sequence are the right-hand polarization. Specifically, at a time location 1, a polarization manner for communicating the first preamble sequence on the subcarrier 14 is the left-hand polarization, and at the time location 1, a polarization manner for communicating the first preamble sequence on the subcarrier 15 is the right-hand polarization. Polarization manners of preamble sequences corresponding to adjacent subcarriers are different. At a time location 2, a polarization manner for communicating the first preamble sequence on the subcarrier 15 is the left-hand polarization, and at the time location 2, a polarization manner for communicating the first preamble sequence on a subcarrier 16 is the right-hand polarization. Details are not described one by one.

In this way, polarization manners of preamble sequences corresponding to adjacent subcarriers are different, so that interference between the adjacent subcarriers can be reduced.

In a possible design manner, the polarization manner for communicating the first preamble sequence is determined by the terminal device based on a subcarrier for communicating the first preamble sequence.

Optionally, the subcarrier for communicating the first preamble sequence includes a subcarrier for communicating the preamble sequence at each time location.

A polarization manner for communicating the first preamble sequence at each time location is determined based on a subcarrier for communicating the first preamble sequence at a corresponding time location.

Optionally, subcarriers of the random access resource may be grouped in the foregoing manner 1 to manner 3. The manner 1 is used as an example. A first subcarrier group includes an odd-numbered subcarrier of the random access resource, and a second subcarrier group includes an even-numbered subcarrier of the random access resource.

Optionally, if a subcarrier is an odd-numbered subcarrier of the random access resource, a corresponding polarization manner for communicating the first preamble sequence is a first manner. If a subcarrier is an even-numbered subcarrier of the random access resource, a corresponding polarization manner for communicating the first preamble sequence is a second manner.

For example, the first manner is left-hand polarization, and the second manner is right-hand polarization. With reference to FIG. 10, a subcarrier for communicating the first preamble sequence at a time location 1 is a subcarrier 14, so that a polarization manner for communicating the first preamble sequence at the time location 1 is the left-hand polarization. A subcarrier for communicating the first preamble sequence at a time location 2 is a subcarrier 15, so that a polarization manner for communicating the first preamble sequence at the time location 2 is the right-hand polarization. The rest may be deduced by analogy. Details are not described herein one by one.

A subcarrier for communicating a second preamble sequence at the time location 1 is the subcarrier 15, so that a polarization manner for communicating the second preamble sequence at the time location 1 is the right-hand polarization. A subcarrier for communicating the second preamble sequence at the time location 2 is a subcarrier 16, so that a polarization manner for communicating the second preamble sequence at the time location 2 is the left-hand polarization. The rest may be deduced by analogy. Details are not described herein one by one. At the time location 1, a polarization manner for communicating the first preamble sequence on the subcarrier 14 is the left-hand polarization, and at the time location 1, a polarization manner for communicating the first preamble sequence on the subcarrier 15 is the right-hand polarization. Details are not described one by one.

In this way, polarization manners of preamble sequences corresponding to adjacent subcarriers are different, so that interference between the adjacent subcarriers can be reduced.

In some embodiments, the polarization manner for communicating the first preamble sequence is determined by the terminal device based on a frequency domain location relationship between the first start subcarrier and the start subcarrier of the random access resource. This is similar to the specific implementation in which the first start time location is determined based on the frequency domain location relationship between the first start subcarrier and the start subcarrier of the random access resource.

It should be noted that, for the frequency domain location relationship between the first start subcarrier and the start subcarrier of the random access resource, refer to the foregoing specific implementation. Details are not described herein again.

In some embodiments, a start subcarrier in a case of being spaced by an odd quantity of subcarriers and a start subcarrier in a case of being spaced by an even quantity of subcarriers correspond to different polarization manners, and the start subcarrier in the case of being spaced by an even quantity of subcarriers and the start subcarrier of the random access resource correspond to a same polarization manner.

Optionally, a start subcarrier in a case of being spaced by an even quantity of subcarriers or zero subcarriers corresponds to a first manner, and the start subcarrier in the case of being spaced by an odd quantity of subcarriers corresponds to a second manner.

For example, if the frequency domain location relationship between the first start subcarrier and the start subcarrier of the random access resource is being spaced by an even quantity of subcarriers or zero subcarriers, the polarization manner is the first manner. If the frequency domain location relationship between the first start subcarrier and the start subcarrier of the random access resource is being spaced by an odd quantity of subcarriers, the polarization manner is the second manner.

In this way, polarization manners of preamble sequences corresponding to adjacent subcarriers are different, so that interference between the adjacent subcarriers can be reduced.

In some embodiments, the polarization manner for communicating the first preamble sequence is determined by the terminal device based on the first polarization manner.

Optionally, the first polarization manner is the polarization manner of the preamble sequence corresponding to the start subcarrier of the random access resource.

In some embodiments, if a frequency domain location relationship between the first start subcarrier and the start subcarrier of the random access resource is being spaced by an even quantity of subcarriers, the polarization manner for communicating the first preamble sequence is the same as the first polarization manner. For example, if the first polarization manner is left-hand polarization, the polarization manner for communicating the first preamble sequence is the left-hand polarization.

If a frequency domain location relationship between the first start subcarrier and the start subcarrier of the random access resource is being spaced by an odd quantity of subcarriers, the polarization manner for communicating the first preamble sequence is different from the first polarization manner. For example, if the first polarization manner is left-hand polarization, the polarization manner for communicating the first preamble sequence is right-hand polarization.

In this way, polarization manners of preamble sequences corresponding to adjacent subcarriers are different, so that interference between the adjacent subcarriers can be reduced. The first polarization manner may be configured by the network device, so that a polarization manner of a preamble sequence corresponding to the start subcarrier of the random access resource can be flexibly configured.

It should be noted that one or more of determining the polarization manner for communicating the first preamble sequence, determining the first start time location, determining the first start subcarrier, and determining the first periodicity may be combined. In this way, an anti-interference capability between carriers can be further improved, interference caused by a larger frequency offset can be eliminated, and interference between a plurality of subcarriers can be reduced.

For example, a polarization manner of a preamble sequence corresponding to a subcarrier 1 is the left-hand polarization, and a start time location for communicating the preamble sequence is a start time location 1. A polarization manner of a preamble sequence corresponding to a subcarrier 2 is the left-hand polarization, and a start time location for communicating the preamble sequence is a start time location 2. A polarization manner of a preamble sequence corresponding to a subcarrier 3 is the right-hand polarization, and a start time location for communicating the preamble sequence is the start time location 1. A polarization manner of a preamble sequence corresponding to a subcarrier 4 is the right-hand polarization, and a start time location for communicating the preamble sequence is the start time location 2. In this way, it can be ensured that no interference is generated between the four adjacent subcarriers.

It should be noted that the method provided in this embodiment of this application is applicable to the following case: At a time location, a subcarrier for communicating the first preamble sequence is adjacent to a subcarrier for communicating the second preamble sequence, but a start subcarrier for communicating the first preamble sequence is not adjacent to a start subcarrier for communicating the second preamble sequence, so that inter-carrier interference can be reduced.

S704: The network device determines the first information for communicating the first preamble sequence.

In some embodiments, the first information may include but is not limited to one or more of the following: the first start time location, the first start subcarrier, the first periodicity, and the polarization manner for communicating the first preamble sequence.

In a possible design manner, S704 may include: The network device determines the first start time location for communicating the first preamble sequence. For a specific implementation, refer to the specific implementation in S703 in which the terminal device determines the first start time location for communicating the first preamble sequence. Details are not described herein again.

In some embodiments, the first start time location is determined by the network device based on the first start subcarrier corresponding to the first preamble sequence. For a specific implementation, refer to the specific implementation in S703 in which the first start time location is determined by the terminal device based on the first start subcarrier corresponding to the first preamble sequence. Details are not described herein again.

In some embodiments, the first start time location is determined by the network device based on the frequency domain location relationship between the first start subcarrier and the start subcarrier of the random access resource. For a specific implementation, refer to the specific implementation in S703 in which the first start time location is determined by the terminal device based on the frequency domain location relationship between the first start subcarrier and the start subcarrier of the random access resource. Details are not described herein again.

In some embodiments, the first start time location is determined by the network device based on the information about the first beam. For a specific implementation, refer to the specific implementation in S703 in which the first start time location is determined by the terminal device based on the information about the first beam. Details are not described herein again.

In some embodiments, the first start time location is determined by the network device based on the information about the first cell. For a specific implementation, refer to the specific implementation in S703 in which the first start time location is determined by the terminal device based on the information about the first cell. Details are not described herein again.

In a possible design manner, S704 may include: The network device determines the first periodicity for communicating the first preamble sequence. For a specific implementation, refer to the specific implementation in S703 in which the terminal device determines the first periodicity for communicating the first preamble sequence. Details are not described herein again.

In a possible design manner, S704 may include: The network device determines the first start subcarrier for communicating the first preamble sequence. For a specific implementation, refer to the specific implementation in S703 in which the terminal device determines the first start subcarrier for communicating the first preamble sequence. Details are not described herein again.

In some embodiments, the first start subcarrier corresponding to the first preamble sequence is determined by the network device based on the first start time location. For a specific implementation, refer to the specific implementation in S703 in which the first start subcarrier corresponding to the first preamble sequence is determined by the terminal device based on the first start time location. Details are not described herein again.

In some embodiments, the first start subcarrier corresponding to the first preamble sequence is determined by the network device based on the first grouping information. For a specific implementation, refer to the specific implementation in S703 in which the first start subcarrier corresponding to the first preamble sequence is determined by the terminal device based on the first grouping information. Details are not described herein again.

In a possible design manner, S704 may include: The network device determines the polarization manner for communicating the first preamble sequence. For a specific implementation, refer to the specific implementation in S703 in which the terminal device determines the polarization manner for communicating the first preamble sequence. Details are not described herein again.

In some embodiments, the polarization manner for communicating the first preamble sequence is determined by the network device based on the first start subcarrier. For a specific implementation, refer to the specific implementation in S703 in which the polarization manner for communicating the first preamble sequence is determined by the terminal device based on the first start subcarrier. Details are not described herein again.

In some embodiments, the polarization manner for communicating the first preamble sequence is determined by the network device based on the subcarrier for communicating the first preamble sequence. For a specific implementation, refer to the specific implementation in S703 in which the polarization manner for communicating the first preamble sequence is determined by the terminal device based on the subcarrier for communicating the first preamble sequence. Details are not described herein again.

In some embodiments, the polarization manner for communicating the first preamble sequence is determined by the network device based on the frequency domain location relationship between the first start subcarrier and the start subcarrier of the random access resource. For a specific implementation, refer to the specific implementation in S703 in which the polarization manner for communicating the first preamble sequence is determined by the terminal device based on the frequency domain location relationship between the first start subcarrier and the start subcarrier of the random access resource. Details are not described herein again.

In some embodiments, the polarization manner for communicating the first preamble sequence is determined by the network device based on the first polarization manner. For a specific implementation, refer to the specific implementation in S703 in which the polarization manner for communicating the first preamble sequence is determined by the terminal device based on the first polarization manner. Details are not described herein again.

S705: The terminal device sends the first preamble sequence based on the first information. Correspondingly, the network device receives the first preamble sequence based on the first information.

In some embodiments, the first information may include but is not limited to one or more of the following: the first start time location, the first start subcarrier, the first periodicity, and the polarization manner for communicating the first preamble sequence.

In a possible design manner, S705 may include: The terminal device starts to send the first preamble sequence from the first start time location. Correspondingly, the network device starts to receive the first preamble sequence from the first start time location. In this way, the terminal device sends the first preamble sequence at the first start time location, and the network device detects the first preamble sequence at the first start time location.

In a possible design manner, S705 may include: The terminal device sends the first preamble sequence in the first periodicity. Correspondingly, the network device receives the first preamble sequence in the first periodicity.

In a possible design manner, S705 may include: The terminal device starts to send the first preamble sequence from the first start subcarrier. Correspondingly, the network device starts to receive the first preamble sequence from the first start subcarrier.

In a possible design manner, S705 may include: The terminal device sends the first preamble sequence in the determined polarization manner for communicating the first preamble sequence. Correspondingly, the network device receives the first preamble sequence in the determined polarization manner for communicating the first preamble sequence. In this way, the terminal device sends the first preamble sequence in a specific polarization manner, and the network device detects the first preamble sequence in a corresponding polarization manner.

Based on the communication method shown in FIG. 7, the terminal device obtains the resource configuration information, where the resource configuration information indicates the random access resource, and the resource configuration information may include one or more of the information about the at least two start time locations, the information about the at least two periodicities, the information about the at least two start subcarriers, and the information about the first polarization manner. The terminal device determines, based on the resource configuration information, the first information for communicating the first preamble sequence, and sends the first preamble sequence based on the first information. The first information may include one or more of the following: the first start time location, the first start subcarrier, the first periodicity, and the polarization manner for communicating the first preamble sequence. In this way, the anti-interference capability between the carriers can be improved, and the inter-carrier interference can be reduced. In addition, the available frequency domain resources are not reduced, so that the random access conflicts can be reduced, and the success rate can be ensured.

The communication method shown in FIG. 7 is applicable to a terminal device that supports both the left-hand polarization and the right-hand polarization, and is also applicable to a terminal device that supports only the left-hand polarization or the right-hand polarization, provided that sending can be performed by using a resource that is in the first information determined according to the foregoing method and that is suitable for a polarization manner of the terminal device. For a terminal device that supports only linear polarization, sending may be performed in a manner the same as that of the terminal device that supports both the left-hand polarization and the right-hand polarization, or by using only a resource corresponding to the left-hand polarization or only a resource corresponding to the right-hand polarization.

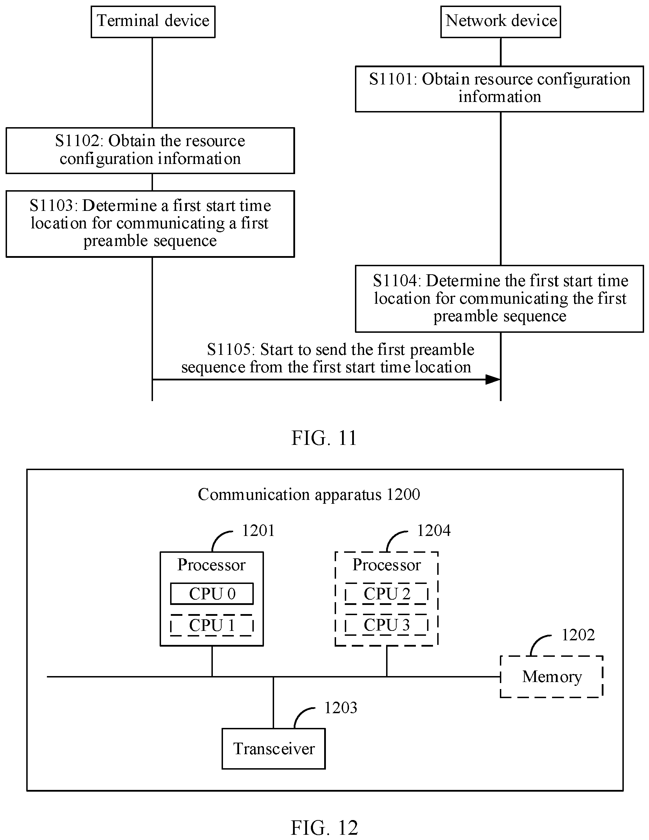

For example, FIG. 11 is a schematic flowchart of a communication method according to an embodiment of this application. The communication method is applicable to communication between the network device and the terminal device shown in FIG. 1 and FIG. 2.

As shown in FIG. 11, the communication method includes the following steps.

S1101: The network device obtains resource configuration information.

For a specific implementation, refer to S701. Details are not described herein again.

S1102: The terminal device obtains the resource configuration information.

For a specific implementation, refer to S702. Details are not described herein again.

S1103: The terminal device determines a first start time location for communicating a first preamble sequence.

For a specific implementation in which the terminal device determines the first start time location for communicating the first preamble sequence, refer to S703. Details are not described herein again.

In a possible design manner, the communication method provided in this embodiment of this application may further include: The terminal device determines a first periodicity for communicating the first preamble sequence; and/or the terminal device determines a first start subcarrier for communicating the first preamble sequence; and/or the terminal device determines a polarization manner for communicating the first preamble sequence. For a specific implementation, refer to S703. Details are not described herein again.

S1104: The network device determines the first start time location for communicating the first preamble sequence.

For a specific implementation in which the network device determines the first start time location for communicating the first preamble sequence, refer to S704. Details are not described herein again.

In a possible design manner, the communication method provided in this embodiment of this application may further include: The terminal device determines the first periodicity for communicating the first preamble sequence; and/or the terminal device determines the first start subcarrier for communicating the first preamble sequence; and/or the terminal device determines the polarization manner for communicating the first preamble sequence. For a specific implementation, refer to S704. Details are not described herein again.

S 1105: The terminal device starts to send the first preamble sequence from the first start time location. Correspondingly, the network device starts to receive the first preamble sequence from the first start time location.

In this way, the terminal device sends the first preamble sequence at the first start time location, and the network device detects the first preamble sequence at the first start time location.

For a specific implementation of S 1105, refer to the corresponding implementation in S705. Details are not described herein again.

In a possible design manner, the communication method provided in this embodiment of this application may further include: The terminal device sends the first preamble sequence in the first periodicity, and correspondingly, the network device receives the first preamble sequence in the first periodicity; and/or the terminal device starts to send the first preamble sequence from the first start subcarrier, and correspondingly, the network device starts to receive the first preamble sequence from the first start subcarrier; and/or the terminal device sends the first preamble sequence in the determined polarization manner for communicating the first preamble sequence, and correspondingly, the network device receives the first preamble sequence in the determined polarization manner for communicating the first preamble sequence. For a specific implementation, refer to S705. Details are not described herein again.

Based on the communication method shown in FIG. 11, the terminal device obtains the resource configuration information, where the resource configuration information indicates a random access resource and includes information about at least two start time locations. The terminal device determines, in the at least two start time locations, the first start time location for communicating the first preamble sequence, and starts to send the first preamble sequence from the first start time location. In this way, a start time location for sending the first preamble sequence is selected, so that preamble sequences corresponding to different frequency domain resources start to be sent at different start time locations, and therefore an anti-interference capability between carriers can be improved, and inter-carrier interference can be reduced. In addition, available frequency domain resources are not reduced, so that random access conflicts can be reduced, and a success rate can be ensured.

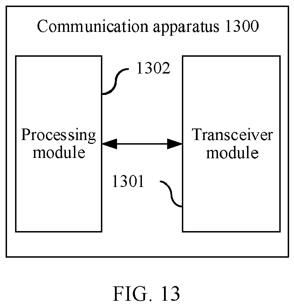

The foregoing describes in detail communication methods provided in embodiments of this application with reference to FIG. 7 to FIG. 11. The following describes in detail communication apparatuses provided in embodiments of this application with reference to FIG. 12 and FIG. 13.

FIG. 12 is a schematic diagram of a structure of a communication apparatus that may be configured to perform the communication methods provided in embodiments of this application. The communication apparatus 1200 may be a terminal device or a network device, or may be a chip used in the terminal device or the network device, or may be another component having a corresponding function. As shown in FIG. 12, the communication apparatus 1200 may include a processor 1201 and a transceiver 1203, and may further include a memory 1202. The processor 1201 is coupled to the memory 1202 and the transceiver 1203, for example, may be connected to the memory 1202 and the transceiver 1203 by using a communication bus, or the processor 1201 may be used independently.

The following describes in detail each component of the communication apparatus 1200 with reference to FIG. 12.

The processor 1201 is a control center of the communication apparatus 1200, and may be one processor or may be a collective term of a plurality of processing elements. For example, the processor 1201 may be one or more central processing units (central processing units, CPUs), may be an application-specific integrated circuit (application-specific integrated circuit, ASIC), or may be configured as one or more integrated circuits implementing embodiments of this application, for example, one or more microprocessors (digital signal processor, DSP) or one or more field programmable gate arrays (field programmable gate arrays, FPGAs).

The processor 1201 may perform various functions of the communication apparatus 1200 by running or executing a software program stored in the memory 1202 and invoking data stored in the memory 1202.

During specific implementation, in an embodiment, the processor 1201 may include one or more CPUs, for example, a CPU 0 and a CPU 1 in FIG. 12.

During specific implementation, in an embodiment, the communication apparatus 1200 may also include a plurality of processors, for example, the processor 1201 and a processor 1204 shown in FIG. 12. Each of the processors may be a single-core processor (single-CPU), or may be a multi-core processor (multi-CPU). The processor herein may be one or more communication devices, circuits, and/or processing cores configured to process data (for example, computer program instructions).

The memory 1202 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage communication device, or any other medium that can carry or store expected program code in an instruction form or a data structure form and that can be accessed by a computer. However, the memory 1202 is not limited thereto. The memory 1202 may be integrated with the processor 1201, or may exist independently, and is coupled to the processor 1201 through an input/output port (not shown in FIG. 12) of the communication apparatus 1200. This is not specifically limited in this embodiment of this application.

For example, the input port may be configured to implement a receiving function performed by the terminal device or the network device in any one of the foregoing method embodiments, and the output port may be configured to implement a sending function performed by the terminal device or the network device in any one of the foregoing method embodiments.

The memory 1202 is configured to store a software program for implementing solutions of this application, and the processor 1201 controls the implementation. For a specific implementation, refer to the method embodiments. Details are not described herein again.

The transceiver 1203 is configured for communication with another communication apparatus. For example, when the communication apparatus 1200 is a terminal device, the transceiver 1203 may be configured to communicate with a network device. For another example, when the communication apparatus 1200 is a network device, the transceiver 1203 may be configured to communicate with a terminal device. In addition, the transceiver 1203 may include a receiver and a transmitter (not separately shown in FIG. 12). The receiver is configured to implement a receiving function, and the transmitter is configured to implement a sending function. The transceiver 1203 may be integrated with the processor 1201, or may exist independently, and is coupled to the processor 1201 through an input/output port (not shown in FIG. 12) of the communication apparatus 1200. This is not specifically limited in this embodiment of this application.

It should be noted that the structure of the communication apparatus 1200 shown in FIG. 12 does not constitute a limitation on the communication apparatus. An actual communication apparatus may include more or fewer components than those shown in the figure, or combine some components, or have different component arrangements.

Actions of the terminal device in steps S702, S703, S705, S 1102, S 1103, and S 1105 may be performed by the processor 1201 in the communication apparatus 1200 shown in FIG. 12 by invoking application program code stored in the memory 1202 to instruct the terminal device to perform the actions.

Actions of the positioning server in steps S701, S704, S 1101, and S 1104 may be performed by the processor 1201 in the communication apparatus 1200 shown in FIG. 12 by invoking application program code stored in the memory 1202 to instruct the network device to perform the actions. This is not limited in this embodiment.

FIG. 13 is a schematic diagram of a structure of another communication apparatus according to an embodiment of this application. For ease of description, FIG. 13 shows only main components of the communication apparatus.

The communication apparatus 1300 includes a transceiver module 1301 and a processing module 1302. The communication apparatus 1300 may be the terminal device or the network device in the foregoing method embodiments. The transceiver module 1301 may also be referred to as a transceiver unit, and is configured to implement sending and receiving functions performed by the terminal device or the network device in any one of the foregoing method embodiments.

It should be noted that the transceiver module 1301 may include a receiving module and a sending module (not shown in FIG. 13). The receiving module is configured to receive data and/or signaling from another device, and the sending module is configured to send data and/or signaling to the another device. A specific implementation of the transceiver module is not specifically limited in this application. The transceiver module may include a transceiver circuit, a transceiver machine, a transceiver, or a communication interface.

The processing module 1302 may be configured to implement a processing function performed by the terminal device or the network device in any one of the foregoing method embodiments. The processing module 1302 may be a processor.

In this embodiment, the communication apparatus 1300 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 1300 may be in a form of the communication apparatus 1200 shown in FIG. 12.

For example, the processor 1201 in the communication apparatus 1200 shown in FIG. 12 may invoke computer-executable instructions stored in the memory 1202, so that the communication method in the foregoing method embodiments is performed.

Specifically, functions/implementation processes of the transceiver module 1301 and the processing module 1302 in FIG. 13 may be implemented by the processor 1201 in the communication apparatus 1200 shown in FIG. 12 by invoking the computer-executable instructions stored in the memory 1202. Alternatively, a function/an implementation process of the processing module 1302 in FIG. 13 may be implemented by the processor 1201 in the communication apparatus 1200 shown in FIG. 12 by invoking the computer-executable instructions stored in the memory 1202, and a function/an implementation process of the transceiver module 1301 in FIG. 13 may be implemented by the transceiver 1203 in the communication apparatus 1200 shown in FIG. 12.

The communication apparatus 1300 provided in this embodiment may perform the foregoing communication methods. Therefore, for technical effects that can be achieved by the communication apparatus 1300, refer to the foregoing method embodiments. Details are not described herein again.

In a possible design solution, the communication apparatus 1300 shown in FIG. 13 is applicable to the communication systems shown in FIG. 1 and FIG. 2, and performs functions of the terminal device in the communication method shown in FIG. 7 or FIG. 11.

The processing module 1302 is configured to obtain resource configuration information. The resource configuration information indicates a random access resource, and the resource configuration information includes information about at least two start time locations.

The processing module 1302 is further configured to determine a first start time location for communicating a first preamble sequence. The first start time location is one of the at least two start time locations.

The transceiver module 1301 is configured to start to send the first preamble sequence from the first start time location.

Optionally, the communication apparatus 1300 may further include a storage module (not shown in FIG. 13). The storage module stores a program or instructions. When the processing module 1302 executes the program or the instructions, the communication apparatus 1300 may perform the functions of the terminal device in the communication method shown in FIG. 7 or FIG. 11.

It should be noted that the communication apparatus 1300 may be a terminal device, or may be a chip (system) or another part or component that may be disposed in the terminal device. This is not limited in this application.

In addition, for technical effects of the communication apparatus 1300, refer to the technical effects of the communication method shown in FIG. 7 or FIG. 11. Details are not described herein again.

In another possible design solution, the communication apparatus 1300 shown in FIG. 13 is applicable to the communication systems shown in FIG. 1 and FIG. 2, and performs functions of the network device in the communication method shown in FIG. 7 or FIG. 11.

The processing module 1302 is configured to obtain resource configuration information. The resource configuration information indicates a random access resource, and the resource configuration information includes information about at least two start time locations.

The processing module 1302 is further configured to determine a first start time location for communicating a first preamble sequence. The first start time location is one of the at least two start time locations.

The transceiver module 1301 is configured to start to receive the first preamble sequence from the first start time location.

Optionally, the communication apparatus 1300 may further include a storage module (not shown in FIG. 13). The storage module stores a program or instructions. When the processing module 1302 executes the program or the instructions, the communication apparatus 1300 may perform the functions of the network device in the communication method shown in FIG. 7 or FIG. 11.

It should be noted that the communication apparatus 1300 may be a network device, or may be a chip (system) or another part or component that may be disposed in the network device. This is not limited in this application.

In addition, for technical effects of the communication apparatus 1300, refer to the technical effects of the communication method shown in FIG. 7 or FIG. 11. Details are not described herein again.

An embodiment of this application provides a communication system. The communication system includes a terminal device and a network device. The terminal device is configured to perform actions of the terminal device in the foregoing method embodiments. For a specific execution method and process, refer to the foregoing method embodiments. Details are not described herein again.

The network device is configured to perform actions of the network device in the foregoing method embodiments. For a specific execution method and process, refer to the foregoing method embodiments. Details are not described herein again.

An embodiment of this application provides a chip system. The chip system includes a logic circuit and an input/output port. The logic circuit may be configured to implement a processing function related to the communication method provided in embodiments of this application, and the input/output port may be configured to implement sending and receiving functions related to the communication method provided in embodiments of this application.

For example, the input port may be configured to implement a receiving function related to the communication method provided in embodiments of this application, and the output port may be configured to implement a sending function related to the communication method provided in embodiments of this application.

In a possible design, the chip system further includes a memory, and the memory is configured to store program instructions and data for implementing functions related to the communication method provided in embodiments of this application.

The chip system may include a chip, or may include a chip and another discrete component.

An embodiment of this application provides a computer-readable storage medium. The computer-readable storage medium includes a computer program or instructions. When the computer program or the instructions are run on a computer, the communication method provided in embodiments of this application is performed.

An embodiment of this application provides a computer program product. The computer program product includes a computer program or instructions. When the computer program or the instructions are run on a computer, the communication method provided in embodiments of this application is performed.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement the embodiments, all or some of the embodiments may be implemented in a form of a computer program product. The computer program product includes one or more computer instructions or computer programs. When the computer instructions or the computer programs are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining resource configuration information, wherein the resource configuration information indicates a random access resource, and the resource configuration information comprises information about at least two start time locations;
determining a first start time location for communicating a first preamble sequence, wherein the first start time location is one of the at least two start time locations; and
starting to send the first preamble sequence from the first start time location.

2. The communication method according to claim 1, wherein the resource configuration information further comprises information about at least two start subcarriers, and a first start subcarrier corresponding to the first preamble sequence is one of the at least two start subcarriers.

3. The communication method according to claim 2, wherein the first start time location is determined based on the first start subcarrier corresponding to the first preamble sequence.

4. The communication method according to claim 2, wherein the first start subcarrier corresponding to the first preamble sequence is determined based on the first start time location.

5. The communication method according to claim 2, wherein the first start time location is determined based on a frequency domain location relationship between the first start subcarrier and a start subcarrier of the random access resource.

6. The communication method according to claim 2, wherein the first start time location is determined based on information about a first beam, and the first beam is used to communicate the resource configuration information.

7. The communication method according to any one of claims 2 to 6, wherein a polarization manner for communicating the first preamble sequence is determined based on the first start subcarrier.

8. The communication method according to any one of claims 2 to 6, wherein a polarization manner for communicating the first preamble sequence is determined based on the frequency domain location relationship between the first start subcarrier and the start subcarrier of the random access resource.

9. The communication method according to any one of claims 2 to 6, wherein a polarization manner for communicating the first preamble sequence is determined based on a first polarization manner, the resource configuration information further comprises information about the first polarization manner, and the first polarization manner is a polarization manner of a preamble sequence corresponding to the start subcarrier of the random access resource.

10. The communication method according to any one of claims 1 to 9, wherein the obtaining resource configuration information comprises:
receiving the resource configuration information.

11. A communication method, comprising:
obtaining resource configuration information, wherein the resource configuration information indicates a random access resource, and the resource configuration information comprises information about at least two start time locations;
determining a first start time location for communicating a first preamble sequence, wherein the first start time location is one of the at least two start time locations; and
starting to receive the first preamble sequence from the first start time location.

12. The communication method according to claim 11, wherein the resource configuration information further comprises information about at least two start subcarriers, and a first start subcarrier corresponding to the first preamble sequence is one of the at least two start subcarriers.

13. The communication method according to claim 12, wherein the first start time location is determined based on the first start subcarrier corresponding to the first preamble sequence.

14. The communication method according to claim 12, wherein the first start subcarrier corresponding to the first preamble sequence is determined based on the first start time location.

15. The communication method according to claim 12, wherein the first start time location is determined based on a frequency domain location relationship between the first start subcarrier and a start subcarrier of the random access resource.

16. The communication method according to any one of claims 11 to 15, wherein a polarization manner for communicating the first preamble sequence is determined based on the first start subcarrier.

17. The communication method according to any one of claims 11 to 15, wherein a polarization manner for communicating the first preamble sequence is determined based on the frequency domain location relationship between the first start subcarrier and the start subcarrier of the random access resource.

18. The communication method according to any one of claims 11 to 17, wherein the method further comprises:
sending the resource configuration information.

19. A communication apparatus, comprising a processing module and a transceiver module, wherein
the processing module is configured to obtain resource configuration information, wherein the resource configuration information indicates a random access resource, and the resource configuration information comprises information about at least two start time locations;
the processing module is further configured to determine a first start time location for communicating a first preamble sequence, wherein the first start time location is one of the at least two start time locations; and
the transceiver module is configured to start to send the first preamble sequence from the first start time location.

20. The communication apparatus according to claim 19, wherein the resource configuration information further comprises information about at least two start subcarriers, and a first start subcarrier corresponding to the first preamble sequence is one of the at least two start subcarriers.

21. The communication apparatus according to claim 20, wherein the first start time location is determined based on the first start subcarrier corresponding to the first preamble sequence.

22. The communication apparatus according to claim 20, wherein the first start subcarrier corresponding to the first preamble sequence is determined based on the first start time location.

23. The communication apparatus according to claim 20, wherein the first start time location is determined based on a frequency domain location relationship between the first start subcarrier and a start subcarrier of the random access resource.

24. The communication apparatus according to claim 20, wherein the first start time location is determined based on information about a first beam, and the first beam is used to communicate the resource configuration information.

25. The communication apparatus according to any one of claims 20 to 24, wherein a polarization manner for communicating the first preamble sequence is determined based on the first start subcarrier.

26. The communication apparatus according to any one of claims 20 to 24, wherein a polarization manner for communicating the first preamble sequence is determined based on the frequency domain location relationship between the first start subcarrier and the start subcarrier of the random access resource.

27. The communication apparatus according to any one of claims 20 to 24, wherein a polarization manner for communicating the first preamble sequence is determined based on a first polarization manner, the resource configuration information further comprises information about the first polarization manner, and the first polarization manner is a polarization manner of a preamble sequence corresponding to the start subcarrier of the random access resource.

28. The communication apparatus according to any one of claims 19 to 27, wherein
the transceiver module is further configured to receive the resource configuration information.

29. A communication apparatus, comprising a processing module and a transceiver module, wherein
the processing module is configured to obtain resource configuration information, wherein the resource configuration information indicates a random access resource, and the resource configuration information comprises information about at least two start time locations;
the processing module is further configured to determine a first start time location for communicating a first preamble sequence, wherein the first start time location is one of the at least two start time locations; and
the transceiver module is configured to start to receive the first preamble sequence from the first start time location.

30. The communication apparatus according to claim 29, wherein the resource configuration information further comprises information about at least two start subcarriers, and a first start subcarrier corresponding to the first preamble sequence is one of the at least two start subcarriers.

31. The communication apparatus according to claim 30, wherein the first start time location is determined based on the first start subcarrier corresponding to the first preamble sequence.

32. The communication apparatus according to claim 30, wherein the first start subcarrier corresponding to the first preamble sequence is determined based on the first start time location.

33. The communication apparatus according to claim 30, wherein the first start time location is determined based on a frequency domain location relationship between the first start subcarrier and a start subcarrier of the random access resource.

34. The communication apparatus according to any one of claims 29 to 33, wherein a polarization manner for communicating the first preamble sequence is determined based on the first start subcarrier.

35. The communication apparatus according to any one of claims 29 to 33, wherein a polarization manner for communicating the first preamble sequence is determined based on the frequency domain location relationship between the first start subcarrier and the start subcarrier of the random access resource.

36. The communication apparatus according to any one of claims 29 to 35, wherein
the transceiver module is further configured to send the resource configuration information.

37. A communication apparatus, wherein the communication apparatus comprises a processor, and the processor is coupled to a memory;
the memory is configured to store a computer program; and
the processor is configured to execute the computer program stored in the memory, so that the communication method according to any one of claims 1 to 18 is performed.

38. A computer-readable storage medium, wherein the computer-readable storage medium comprises a computer program or instructions; and when the computer program or the instructions are run on a computer, the communication method according to any one of claims 1 to 18 is performed.

39. A computer program product, wherein the computer program product comprises a computer program or instructions; and when the computer program or the instructions are run on a computer, the communication method according to any one of claims 1 to 18 is performed.

40. A communication apparatus, comprising a logic circuit and an input/output port, wherein the input/output port is configured to obtain resource configuration information, the logic circuit is configured to generate a first preamble sequence based on the resource configuration information according to the method according to any one of claims 1 to 9, and the input/output port is further configured to output the first preamble sequence.

41. A communication apparatus, comprising a logic circuit and an input/output port, wherein the logic circuit is configured to determine a first start time location of a first preamble sequence according to the method according to any one of claims 11 to 17, and the input/output port is further configured to obtain the first preamble sequence at the first start time location.
